# EUROPÄISCHE PATENTSCHRIFT

(11) **EP 3 127 293 B1**
(45) Veröffentlichungstag und Bekanntmachung des Hinweises auf die Patenterteilung: **19.08.2020**
(21) Anmeldenummer: 15704996.6
(22) Anmeldetag: 10.02.2015
(51) Int. Cl.: H04L 29/06

(54) **VERTEILTES AUTHENTIFIZIERUNGSSYSTEM UND -VERFAHREN**
DISTRIBUTED AUTHENTICATION SYSTEM AND METHOD
SYSTÈME D'AUTHENTIFICATION RÉPARTI ET PROCÉDÉ CORRESPONDANT

(30) Priorität: 02.04.2014 DE 102014206325
(43) Veröffentlichungstag der Anmeldung: 08.02.2017
(60) Teilanmeldung: 20175063.5
(73) Patentinhaber: Bundesdruckerei GmbH, 10969 Berlin (DE)
(72) Erfinder: BYSZIO, Frank, 16348 Wandlitz (DE); NGUYEN, Kim, 10437 Berlin (DE)
(74) Vertreter: Richardt Patentanwälte PartG mbB
(86) Internationale Anmeldenummer: PCT/EP2015/052714
(87) Internationale Veröffentlichungsnummer: WO 2015/149976

(56) Entgegenhaltungen:
- WO-A1-2011/006791
- US-A1- 2003 163 737
- US-A1- 2012 144 464

## Beschreibung

Die Erfindung betrifft ein verteiltes Authentifizierungssystem, ein Bridge-Computersystem, ein Computersystem welches einen Dienst und ein Authentifizierungssystem bereitstellt, sowie entsprechende, von den jeweiligen Systemen ausgeführte computerimplementierte Verfahren.

Über das Internet wird eine Vielzahl von Diensten einer großen Zahl von voneinander unabhängigen Dienstanbietern bereitgestellt. Bei den Diensten handelt es sich z.B. um Online-Shops, Bankdienstleistungen, Nachrichtenportale mit speziellen Informations- und Serviceangeboten für Abonnenten, Kundenportale von Firmen, Kollaborationslattformen für die Onlinezusammenarbeit von Teams und dergleichen.

In zunehmendem Maße werden auch Softwareprogramme, Speicherplatz und Rechenkapazitäten als Dienst, z.B. als Clouddienst, angeboten.

Kostenpflichtige Dienste oder Dienste, die nur einem bestimmten Nutzerkreis Zugang zu vertraulichen Daten gewähren sollen, erfordern von den Nutzern, sich gegenüber dem Dienst zu authentifizieren.

In der Regel hat der Kunde die Wahl unter einer Vielzahl organisatorisch getrennter, zueinander in Konkurrenz stehender Dienstanbieter, die jeweils eigene Authentifizierungssysteme bereitstellen. Der Nutzer muss sich in der Regel für jeden Dienst, den er nutzen will, zunächst registrieren und erhält im Zuge des Registrierungsvorgangs dienstspezifische wie auch nutzerspezifische Authentifizierungsdaten. Zudem unterscheiden sich die Authentifizierungssysteme verschiedener Dienstanbieter oft auch hinsichtlich der technischen Authentifizierungsverfahren und der Sicherheitsstufe des Authentifizierungsverfahrens. So haben unterschiedliche Dienstanbieter etwa unterschiedliche Erfordernisse im Hinblick auf die Länge und Zusammensetzung von Passwörtern oder die Art der Authentifizierungsdaten (Passwort, biometrische Daten, etc.).

Angesichts der großen Vielzahl von Diensten und Dienstanbietern, die jeweils eigene Authentifizierungssysteme für ihre Dienste vorsehen, stellt sich den Nutzern in verstärktem Maße das Problem, eine Vielzahl von sensiblen Authentifizierungsdaten sicher zu verwahren und dennoch schnell verfügbar zu haben.

Sogenannte "Single Sign-on" Verfahren ermöglichen es einem Benutzer nach einer einmaligen Authentifizierung an einem Arbeitsplatzrechner, auf alle Rechner und Dienste, für die er lokal berechtigt (autorisiert) ist, über den selben Rechner zuzugreifen, ohne sich jedes Mal neu anmelden zu müssen. Diese Verfahren setzen jedoch voraus, dass die Rechner und Dienste zur gleichen "Vertrauensdomäne" gehören, die Rechner also typischerweise alle zu einer bestimmten organisatorischen Einheit, etwa einem Unternehmen, einer Abteilung oder einer Arbeitsgruppe, gehören. Diese Voraussetzung ist jedoch bei den über das Internet bereitgestellten Diensten verschiedener Anbieter nicht gegeben, da diese i.d.R. von unabhängigen, oftmals sogar konkurrierenden Unternehmen stammen, welche selbst die ausschließliche Kontrolle über ihre jeweiligen Authentifizierungssysteme innehaben und auch behalten wollen.

Passwortmanager-Programme sind hilfreich bei der Verwaltung von Passwörtern. Sie sind aber auf passwortbasierte Authentifizierungssysteme beschränkt und eignen sich i.d.R. nicht zur Verwaltung anderer Authentifizierungsdaten wie etwa biometrischen Daten. Außerdem sind sie auf einem Rechner gespeichert, der oftmals gerade dann nicht verfügbar ist, wenn ein bestimmtes Passwort für einen Dienst erforderlich ist. Ein Nutzer, der von seinem Privatrechner zu Hause aus ein Ticket für eine Geschäftsreise buchen möchte, wird möglicherweise die erforderlichen Zugangsdaten für den Online-Ticketkauf auf dem Dienstrechner im Büro gespeichert haben, sodass der Online-Kauf des Tickets vom Heimrechner aus scheitern wird.

Eine Speicherung von Passwörtern auf mobilen Geräten, wie etwa Smartphones, stellt auch keine zufriedenstellende Lösung dar, da auch ein mobiles Gerät z.B. wegen Vergessens oder wegen Batterieschwäche nicht verfügbar sein kann und/oder weil die erhöhte Gefahr des Verlusts des mobilen Geräts auch das Risiko erhöht, dass die auf diesem Gerät gespeicherten Passwörter verlorengehen.

In der Praxis tritt also häufig der Fall auf, dass Nutzer von der Nutzung von Diensten ausgeschlossen sind, da sie das Passwort vergessen haben oder die gespeicherten Passwörter, Sicherheitstoken oder andere Identitätsnachweise aus anderen Gründen zumindest momentan nicht verfügbar sind.
US Patentanmeldung 2012/0144464 A1 beschreibt ein Authentifizierungsverfahren und System gemäß welchem sich ein Nutzer gegenüber einer Vielzahl von Ziel-Servern authentifiziert. Die Server können zum Beispiel E-Mail Server, online-Banking-Server, kreditkartenbasierte Zahlungsabwicklung-Server, E-Commerce Server, Aktienhandels-Server, Datenbank-Server und Medienserver sein. Das Verfahren beinhaltet einen Bridgeserver, der das Authentifizierungsverfahren durchführt und es einem Nutzer so ermöglicht, Zugang zu einem oder mehreren Servern zu erhalten.

US Patentanmeldung US 2003/0163737 A1 beschreibt ein sicheres, verteiltes single-Login Authentifizierungssystem. Das System umfasst einen Client und einen Server. Der Client empfängt Nutzernamen und Passwort von einem Nutzer und testet diese Lok in-Daten gegenüber einer Vielzahl von potentiellen Authentifizierungsserver um festzustellen ob die Login-Daten valide sind. Hierbei wird das Passwort mit einem zeitlich veränderlichen Hashwert kombiniert. Dies verhindert, dass das System das Passwort gegenüber unberechtigten Dritten offenbart die diese Information Miss brauchen könnten.

Die Internationale Patentanmeldung WO 2011/006791 A1 betrifft ein Verfahren zum Lesen zumindest eines in einem ID-Token gespeicherten Attributs, wobei der ID-Token einem Nutzer zugeordnet ist. Das Verfahren umfasst eine Authentifizierung des Nutzers gegenüber dem ID-Token, eine Authentifizierung eines ersten Computersystems gegenüber dem ID-Token über ein erstes Netzwerk, nach erfolgreicher Authentifizierung des Nutzers und des ersten Computersystems gegenüber dem ID-Token, einen Lesezugriff des ersten Computersystems auf das zumindest eine in dem ID-Token gespeicherte Attribut, Signierung des zumindest einen aus dem ID-Token gelesenen Attributs durch das erste Computersystem, und Übertragung des signierten Attributs an ein zweites Computersystem über ein zweites Netzwerk.

Ein "ID-Token" ist ein tragbares elektronisches Gerät, wie zum Beispiel ein USB-Stick, oder ein Dokument, insbesondere ein Wert- oder Sicherheitsdokument, das z.B. in Form einer Chipkarte ausgebildet ist. Ein ID-Token ist einem Nutzer zugeordnet und umfasst einen Prozessor und ein Speichermedium zur sichern Speicherung von Daten, z.B. von personenbezogenen Attributen oder privaten Schlüsseln. Bei einem "Dokument" kann es sich um ein papierbasiertes und/oder kunststoffbasiertes Dokument handeln. Darunter fallen zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Bankkarten und Kreditkarten, Frachtbriefe oder sonstige Berechtigungsnachweise, in die ein Datenspeicher und Prozessor integriert ist.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen.

Ein "Authentifizierungssystem" ist ein Datenverarbeitungssystem, welches in der Lage ist, einen Nutzer, welcher sich initial bei diesem Authentifizierungssystem registriert hat, anhand von Daten, welcher dieser Nutzer im Zuge späterer Authentifizierungsversuche zur Verfügung stellt (sog. "Authentifizierungsdaten"), festzustellen, ob es sich bei dem die Daten zur Verfügung stellenden Nutzer um den Nutzer handelt, der ursprünglich registriert wurde. Diese Feststellung wird von einem Entscheidungsalgorithmus des Authentifizierungssystems automatisch getroffen. In Abhängigkeit der technischen und organisatorischen Sicherheitsvorkehrungen eines Authentifizierungssystems ist die besagte Feststellung mehr oder weniger sicher. Der Grad der Verlässlichkeit der Richtigkeit dieser Feststellung wird anhand einer Maßeinheit ausgedrückt, die im Folgenden als ,Sicherheitsstufe' bezeichnet wird. Ein Authentifizierungssystem kann aus einem Datenverarbeitungsgerät, z.B. einem Computer, bestehen, oder aus mehreren miteinander zusammenwirkenden Datenverarbeitungsgeräten.

Ein "Authentifizierungssystem" ist von jedem anderen "Authentifizierungssystem" im Sinne der vorliegenden Erfindung konzeptionell und sicherheitstechnisch dadurch abgegrenzt, dass die letztendliche Entscheidungshoheit über den Registrierungsprozess wie auch über den Entscheidungsalgorithmus dieses Authentifizierungssystems ausschließlich in der Hand der Betreiber dieses Authentifizierungssystems liegt, nicht jedoch in der Hand der Betreiber der anderen Authentifizierungssysteme.

Insoweit bestimmte Teilfunktionen eines Authentifizierungsprozesses an Dritte delegiert werden, unterliegt auch diese Delegation der Verfügung der Betreiber des besagten Authentifizierungssystems.

Eine Authentifizierung einer Entität A gegenüber einem Authentifizierungssystem B umfasst also seitens A, dass ein Datenwert zum Nachweis einer behaupteten Eigenschaft, z.B. der Identität, an B übermittelt wird, und seitens B, dass dieser Datenwert überprüft wird und im Falle dessen, dass der Datenwert als glaubhafter Nachweis der behaupteten Eigenschaft angesehen wird, B die Entität A als berechtigt anerkennt. In diesem Fall hat sich A gegenüber B erfolgreich authentifiziert.

Ein "verteiltes Authentifizierungssystem" ist ein System, in welchem zwei oder mehrere einzelne Authentifizierungssysteme gemäß obiger Definition funktional miteinander verbunden sind. Die funktionale Verbindung kann erfindungsgemäß insbesondere darin bestehen, dass eines der einzelnen Authentifizierungssysteme als alternatives Rückfall-Authentifizierungssystem für ein anderes einzelnes Authentifizierungssystem fungiert.

Unter einem "Dienst" wird im Folgenden jeder über ein Netzwerk, z.B. das Internet, angebotene elektronische Dienst verstanden, welcher nicht auf die Bestätigung einer Identität eines Nutzers abzielt. Insbesondere kann ein "Dienst" eine der Folgenden Anwendungen umfassen: eine online-Bankdienstleistung, eine von einer Behörde zur Verfügung gestellte Web-Anwendung zur Datenkommunikation mit den Behörden (z.B. zum Zwecke der Steuererklärung), ein Online-Shop, ein soziales Netzwerk, eine webbasierte Zusammenarbeitsplattform, ein Cloud-Dienst, ein Carsharing-Portal, ein zugangsgeschütztes Nachrichten- oder Informationsportal, etc. Ein Computersystem, welches einen solchen Dienst bereitstellt, wird im Folgenden auch als "Dienst-Computersystem" bezeichnet

Ein "eID-Provider-Computersystem" ist ein Datenverarbeitungssystem welches die Identität eines Nutzers gegenüber Dritten in automatisierter Form bestätigen oder verneinen kann. Ein "eID-Provider-Computersystem" befindet sich vorzugsweise in einer besonders geschützten Umgebung, insbesondere in einem so genannten Trust-Center, sodass die Bestätigung einer Identität eines Nutzers durch ein eID-Provider-Computersystem eine besonders hohe Verlässlichkeit aufweist.

Ein "Bridge-Computersystem" ist ein Datenverarbeitungssystem, welches eine funktionale Verbindung zwischen einem Computersystem, das einen Dienst bereitstellt, und mindestens einem weiteren Computersystem herstellt. Das weitere Computersystem kann nach Ausführungsformen der Erfindung ein anderes Computersystem sein, das einen anderen Dienst bereitstellt, oder ein eID-Provider-Computersystem.

Ein "Register" ist ein Datencontainer, z.B. eine Datei oder eine relationale Datenbank, welcher eine Vielzahl von Nutzerkennungen und damit verknüpften weiteren Datenwerten gespeichert hat.

Eine "Nutzerkennung" ist ein Identifikator eines Nutzers, welcher zumindest im Hinblick auf sämtliche in dem Register eines Bridge-Computersystems gespeicherten Nutzerkennungen einzigartig ist für einen bestimmten Nutzer.

Im Folgenden werden zwei alternative Varianten I, II eines verteilten Authentifizierungssystems vorgestellt, wobei Variante II nicht Teil der Erfindung ist.

### Variante I: Verteiltes Authentifizierungssystem basierend auf mindestens zwei Dienst-Computersystemen

In einem Aspekt betrifft die Erfindung ein verteiltes Authentifizierungssystem, das zumindest ein erstes Computersystem und ein zweites Computersystem sowie ein Bridge-Computersystem umfasst.

Das erste Computersystem stellt ein erstes Authentifizierungssystem über ein Netzwerk zur Verfügung, welches einem oder mehreren Nutzern eine Authentifizierung gegenüber diesem ersten Authentifizierungssystem ermöglicht. Außerdem stellt das erste Computersystem einen ersten Dienst über das Netzwerk an die ein oder mehreren Nutzer bereit unter der Voraussetzung, dass diese Nutzer sich erfolgreich gegenüber dem ersten Authentifizierungssystem authentifiziert haben. Das zweite Computersystem stellt ein zweites Authentifizierungssystem über das Netzwerk zur Verfügung, welches einem oder mehreren Nutzern eine Authentifizierung gegenüber diesem zweiten Authentifizierungssystem ermöglicht. Außerdem stellt das zweite Computersystem einen zweiten Dienst über das Netzwerk an die ein oder mehreren Nutzer bereit unter der Voraussetzung, dass diese Nutzer sich erfolgreich gegenüber dem zweiten Authentifizierungssystem authentifiziert haben. Das Bridge-Computersystem ist mit dem ersten und zweiten Computersystem über das Netzwerk verbunden.
Das erste Authentifizierungssystem ist dazu ausgebildet, eine Authentifizierungsanfrage eines Nutzers gegenüber dem ersten Authentifizierungssystem zu empfangen. Das erste Authentifizierungssystem umfasst eine Schnittstelle zum Empfang der Authentifizierungsanfrage von einem Nutzer-Computersystem, das dem Nutzer zugeordnet ist. Das Senden der Authentifizierungsanfrage vom Nutzer-Computersystem an das erste Authentifizierungssystem ist als Authentifizierungsversuch anzusehen.
Im Falle eines erfolglosen Authentifizierungsversuchs des Nutzers gegenüber dem ersten Authentifizierungssystem kommuniziert das erste Authentifizierungssystem diesen erfolglosen Authentifizierungsversuch an das Bridge-Computersystem mittels einer ersten Nachricht.

Falls das Bridge-Computersystem die erste Nachricht erhält, sendet es eine Aufforderung zur Eingabe zumindest einer Nutzerkennung an das Nutzer-Computersystem und empfängt in Antwort auf diese Aufforderung die Nutzerkennung von dem Nutzer-Computersystem. Das Bridge-Computersystem enthält ein Register, welches auch dem Nutzer, der den erfolglosen Authentifizierungsversuch initiiert hat, mehrere Computersysteme (130, 138), welche dem Nutzer nach jeweils erfolgreicher Authentifizierung einen Dienst bereitstellen, zuweist. Das Register weist diesem Nutzer zumindest das erste und zweite Computersystem zu. Das Bridge-Computersystem identifiziert nach Erhalt der ersten Nachricht eine in dem Register gespeicherte Adresse des zweiten Computersystems anhand der empfangenen Nutzerkennung und initiiert die Ausführung des zweiten Authentifizierungssystems zur Authentifizierung des Nutzers gegenüber dem zweiten Authentifizierungssystem. Zur Initiierung des zweiten Authentifizierungssystems verwendet das Bridge-Computersystem die identifizierte Adresse.

Falls der Nutzer sich gegenüber dem initiierten zweiten Authentifizierungssystem erfolgreich authentifiziert, kommuniziert das zweite Authentifizierungssystem diese erfolgreiche Authentifizierung an das Bridge-Computersystem mittels einer zweiten Nachricht.

Falls das Bridge-Computersystem die zweite Nachricht empfängt, kommuniziert es eine Identitäts-Bestätigungsnachricht bezüglich des Nutzers an das erste Computersystem. Wenn das erste Authentifizierungssystem die Identität-Bestätigungsnachricht erhält, behandelt es den Nutzer als erfolgreich authentifiziert und stellt diesem denn ersten Dienst bereit.

Vorteilhaft an dem besagten verteilten Authentifizierungssystem ist, dass eine nutzerseitige Speicherung und Verwaltung verschiedener Authentifizierungsdaten für eine Vielzahl von Authentifizierungssystemen bzw. Dienstleistern, die immer mit einem Sicherheitsrisiko verbunden ist, nicht mehr erforderlich ist: sollte der Nutzer beispielsweise aus irgendwelchen Gründen die Authentifizierungsdaten für das erste Authentifizierungssystem temporär oder permanent nicht mehr verfügbar haben, aber zumindest noch die Authentifizierungsdaten für den zweiten Dienst (den er im Moment eigentlich gar nicht beanspruchen möchte) verfügbar haben, so bewirkt das verteilte Authentifizierungssystem, insbesondere das Bridge-Computersystem, dass der Nutzer sich gegenüber diesem zweiten Computersystem authentifizieren kann und ein erfolgreicher Authentifizierungsprozess gegenüber dem zweiten Authentifizierungssystem als Nachweis der Vertrauenswürdigkeit des Nutzers dient. Dies erhöht die Sicherheit, da der Nutzer nicht mehr veranlasst ist, eine Vielzahl von sensiblen Authentifizierungsdaten mit sich zu führen.

In einem weiteren vorteilhaften Aspekt vermeidet das vorgenannte System den gegebenenfalls erheblichen Aufwand (für den Nutzer wie auch für den Dienstanbieter), der mit einer manuellen/persönlichen Neuregistrierung bzw. Neuzuweisung von Authentifizierungsdaten verbunden ist.

In einem weiteren vorteilhaften Aspekt kann das vorgenannte System als ein modifiziertes "Single Sign-on" System betrachtet und verwendet werden, welches im Gegensatz zu vorbekannten "Single Sign-on" Systemen auch in einem technischen Kontext einsetzbar ist, in welchem die Inhaber der verschiedenen Computersysteme/Authentifizierungssysteme weiterhin volle Kontrolle über ihr jeweiliges Authentifizierungssystem behalten wollen und insofern die Verantwortung nicht an einen zentralen Registrierungsdienst abgeben. Die ersten und zweiten Authentifizierungssysteme können weiterhin eigenständig von unterschiedlichen Organisationen und Gruppen betrieben werden. Sie haben jederzeit die Möglichkeit, einzelnen Nutzern, zum Beispiel aufgrund von Fehlverhalten oder Nichterfüllung eines Vertrags, von der Nutzung ihrer Dienste dadurch auszuschließen, dass sie eine Authentifizierung gegenüber ihrem jeweiligen Authentifizierungssystem verweigern. Kooperation zwischen den einzelnen Dienstanbietern ist nur insofern erforderlich, als diese darauf vertrauen müssen, dass die Sicherheitsstandards der alternativ verwendeten Authentifizierungssysteme hinreichend sind, um auf die Authentizität der vom Nutzer übermittelten (Identitäts-) Daten zu vertrauen. In der Regel dürften diese jedoch höher sein als die klassischen, E-Mail-basierten Rücksetzungsmechanismen. Somit ermöglicht das vorgenannte verteilte Authentifizierungssystem eine Bereitstellung eines "modifizierten Single Sign-on Systems" in einem technischen und organisatorischen Kontext, welcher die Verwendung bislang bekannter "Single Sign-on" Systeme unmöglich machte.

Nach Ausführungsformen enthält die erste Nachricht eine Adresse des Nutzer-Computersystems oder eine sonstige Information in Bezug auf das Nutzer-Computersystem, die es dem Bridge-Computersystem ermöglicht, eine Aufforderung zur Eingabe zumindest einer Nutzerkennung an das Nutzer-Computersystem zu senden. Die Adresse kann zum Beispiel eine IP Adresse des Nutzer-Computersystem s, eine E-Mail-Adresse des Nutzers, und/oder eine Session-ID einer bestehenden Sitzung zwischen dem Nutzer-Computersystem und dem ersten Computersystem sein. Vorzugsweise enthält die erste Nachricht alle Daten, die notwendig sind, um eine geschützte Verbindung zwischen dem Bridgecomputersystem und dem Nutzer-Computersystem zur Übertragung der Nutzerkennung von dem Nutzer-Computersystem an das Bridge-Computersystem aufzubauen, zum Beispiel Daten, aus welchen Sitzungsschlüssel abgeleitet werden können.

Nach Ausführungsformen enthält das Register des Bridgecomputersystems keinerlei Authentifizierungsdaten. Vorzugsweise enthält es lediglich Nutzerkennungen, welche mit Adressen von Computersystemen verknüpft gespeichert sind, gegenüber welchen sich der Nutzer bereits registriert hat (was impliziert, dass der Nutzer sich gegenüber diesen Computersystemen bzw. diesen Authentifizierungssystemen authentifizieren können sollte, so dass die entsprechenden Computersysteme/Authentifizierungssysteme als alternative "Rückfall-Authentifizierungssysteme" in Frage kommen (also, um nach obiger Terminologie als das "zweite Computersystem" zu wirken). Das zweite bzw. alternative Authentifizierungssystem erlaubt dem Nutzer, sich gegenüber dem zweiten und damit letztlich auch gegenüber dem ersten Authentifizierungssystem zu authentifizieren, auch wenn er die Authentifizierungsdaten des ersten Authentifizierungssystems nicht verfügbar hat. Das erste Computersystem stellt also den ersten Dienst bereit, den der Nutzer eigentlich in Anspruch nehmen will, während das zweite Computersystem bzw. das dritte, vierte oder sonstige weitere Computersystem lediglich als Ausweichs-Authentifizierungssystem verwendet wird. Eine Nutzung der durch das zweite Computersystem bzw. das dritte, vierte oder sonstige weitere Computersystem bereitgestellten zweiten, dritten und sonstigen weiteren Dienste ist erfindungsgemäß nicht erforderlich oder vorgesehen, kann aber bei einzelnen Ausführungsformen zusätzlich zur Nutzung des ersten Dienstes möglich sein. Eine hohe Anzahl an integrierten zweiten, dritten und weiteren Computersystemen ist vorteilhaft, da dies die Ausfallsicherheit erhöht: falls das zweite Computersystem beispielsweise aufgrund technischer Probleme nicht verfügbar sein sollte, um ein alternatives Authentifizierungssystem bereitzustellen, kann das Bridge-Computersystem auf das dritte oder weitere Computersystem bzw. Authentifizierungssystem zurückgreifen. Dies kann zum Beispiel geschehen, wenn nach einer gewissen Mindestzeit nach Initiierung des zweiten Authentifizierungssystems das Bridge-Computersystem immer noch keine zweite Nachricht von dem zweiten Authentifizierungssystem erhalten wird, oder eine Nichtverfügbarkeits-Nachricht erhalten wird. Außerdem erhöht es die Wahrscheinlichkeit, dass der Nutzer sich zumindest bei einem von einer Vielzahl von Authentifizierungssystemen erfolgreich authentifizieren kann, da es unwahrscheinlich ist, dass der Nutzer sämtliche Authentifizierungsdaten für alle Dienstanbieter zur gleichen Zeit vergessen hat.

Nach Ausführungsformen umfasst das verteilte Authentifizierungssystem zumindest noch ein drittes Computersystem. Das dritte Computersystem stellt ein drittes Authentifizierungssystem über das Netzwerk zur Verfügung. Das dritte Authentifizierungssystem ermöglicht es einem oder mehreren Nutzern, sich gegenüber dem Dritten Authentifizierungssystem zu authentifizieren. Außerdem stellt das dritte Computersystem einen dritten Dienst über das Netzwerk an die ein oder mehreren Nutzer bereit unter der Voraussetzung, dass diese Nutzer sich erfolgreich gegenüber dem dritten Authentifizierungssystem authentifiziert haben. Optional können auch vierte, fünfte und weitere Computersysteme, die jeweils in der vorbeschriebenen Art eigene Authentifizierungssysteme und, nach entsprechender Authentifizierung gegenüber dem jeweils eigenen Authentifizierungssystem, auch entsprechende Dienste bereitstellen, in dem verteilten Authentifizierungssystem enthalten sein. Der Nutzer hat sich einmalig bei jedem der Dienstanbieter, welche diese Computersysteme bzw. Authentifizierungssysteme und Dienste bereitstellen, registriert, und eine Verknüpfung der Nutzerkennung dieses Nutzers mit einer Adresse der jeweiligen Computersysteme, bei welchen sich der Nutzer registriert hat, ist in dem Register des Bridge-Computersystems gespeichert.

Das zweite Computersystem stellt ein zweites Authentifizierungssystem über das Netzwerk zur Verfügung, welches einem oder mehreren Nutzern eine Authentifizierung gegenüber diesem zweiten Authentifizierungssystem ermöglicht. Außerdem stellt das zweite Computersystem einen zweiten Dienst über das Netzwerk an die ein oder mehreren Nutzer bereit unter der Voraussetzung, dass diese Nutzer sich erfolgreich gegenüber dem zweiten Authentifizierungssystem authentifiziert haben.

In einem weiteren Aspekt wird hier ein nicht beanspruchtes Bridge-Computersystem beschrieben. Das Bridge-Computersystem umfasst eine Netzwerkschnittstelle zur Verbindung des Bridge-Computersystems über ein Netzwerk mit ein oder mehreren Nutzer-Computersystemen, die jeweils einem Nutzer zugeordnet sind, und zur Verbindung zumindest mit einem ersten und mit einem zweiten Computersystem. Wie oben bereits beschrieben ist das erste Computersystem dazu ausgebildet ist, ein erstes Authentifizierungssystem und einen ersten Dienst über das Netzwerk an einen oder mehrere Nutzer bereitzustellen. Das zweite Computersystem ist dazu ausgebildet, ein zweites Authentifizierungssystem und einen zweiten Dienst über das Netzwerk an einen oder mehrere Nutzer bereitzustellen. Der erste und zweite Dienst werden dabei jeweils nur nach erfolgreicher Authentifizierung gegenüber dem jeweiligen Authentifizierungssystem bereitgestellt. Das Bridge-Computersystem umfasst das Register entsprechend einer der zuvor beschriebenen Ausführungsformen.

Die Netzwerkschnittstelle ist dazu ausgebildet, eine erste Nachricht von dem ersten Computersystem zu empfangen, wobei der Empfang der ersten Nachricht einen erfolglosen Authentifizierungsversuch eines der Nutzer gegenüber dem ersten Computersystem anzeigt. Im Falle des Erhalts der ersten Nachricht sendet das Bridge-Computersystem eine Aufforderung zur Eingabe zumindest einer Nutzerkennung an das Nutzer-Computersystem, empfängt zumindest die Nutzerkennung vom Nutzer-Computersystem, identifiziert eine in dem Register gespeicherte Adresse des zweiten Computersystems anhand der empfangenen Nutzerkennung und initiiert die Ausführung des zweiten Authentifizierungssystems zur Authentifizierung des Nutzers. Die Initiierung erfolgt unter Verwendung der identifizierten Adresse. Die Netzwerkschnittstelle des Bridge-Computersystems ist dazu ausgebildet, eine zweite Nachricht von dem zweiten Computersystem zu empfangen, wobei der Empfang der zweiten Nachricht eine erfolgreiche Authentifizierung des Nutzers gegenüber dem zweiten Authentifizierungssystem anzeigt. Im Falle des Erhalts der zweiten Nachricht kommuniziert das Bridge-Computersystem eine Identitäts-Bestätigungsnachricht bezüglich des Nutzers an das erste Authentifizierungssystem um das erste Computersystem zu veranlassen, den Nutzer als erfolgreich authentifiziert zu behandeln und diesem den ersten Dienst bereitzustellen.

In einem weiteren Aspekt betrifft die Erfindung ein computerimplementiertes Verfahren zur Authentifizierung eines Nutzers gegenüber einem ersten Authentifizierungssystem. Das Verfahren umfasst:
- Senden einer Authentifizierungsanfrage des Nutzers von einem dem Nutzer zugeordneten Nutzer-Computersystem an das erste Authentifizierungssystem, welches von einem ersten Computersystem bereitgestellt wird. Das erste Computersystem stellt außerdem einen ersten Dienst über ein Netzwerk an einen oder mehrere erfolgreich über das erste Authentifizierungssystem authentifizierte Nutzer bereit;
- Empfang der Authentifizierungsanfrage durch das erste Computersystem;
- im Falle eines erfolglosen Authentifizierungsversuchs des Nutzers gegenüber dem ersten Authentifizierungssystem mittels der Authentifizierungsanfrage, Senden einer ersten Nachricht von dem ersten Computersystem an ein Bridge-Computersystem;
- Empfang der ersten Nachricht durch das Bridge-Computersystem, wobei das Bridge-Computersystem ein Register enthält. Das Register weist dem Nutzer mehrere Computersysteme, welche dem Nutzer nach jeweils erfolgreicher Authentifizierung einen Dienst bereitstellen, zu. Die mehreren zugewiesenen Computersysteme umfassen zumindest das erste und ein zweites Computersystem. Das zweite Computersystem stellt ein zweites Authentifizierungssystem bereit, wobei das zweite Computersystem einen zweiten Dienst über das Netzwerk an ein oder mehrere erfolgreich über das zweite Authentifizierungssystem authentifizierte Nutzer bereitstellt;
- in Antwort auf den Erhalt der ersten Nachricht, Senden einer Aufforderung zur Eingabe einer dem Nutzer zugeordneten Nutzerkennung vom Bridge-Computersystem an das Nutzer-Computersystem um zumindest die Nutzerkennung vom Nutzer-Computersystem zu empfangen;
- Identifikation einer in dem Register gespeicherten Adresse des zweiten Computersystems anhand der empfangenen Nutzerkennung durch das Bridge-Computersystem;
- Initiierung der Ausführung des zweiten Authentifizierungssystems unter Verwendung der identifizierten Adresse zur Authentifizierung des Nutzers;
- Senden einer zweiten Nachricht vom zweiten Computersystem an das Bridge-Computersystem, falls der Nutzer sich im Zuge der Ausführung des zweiten Authentifizierungssystems sich erfolgreich gegenüber dem zweiten Authentifizierungssystem authentifiziert hat;
- in Antwort auf den Erhalt der zweiten Nachricht, Senden einer Identitäts-Bestätigungsnachricht bezüglich des Nutzers vom Bridge-Computersystem an das erste Authentifizierungssystem;
- in Antwort auf den Erhalt der Identitäts-Bestätigungsnachricht, Behandlung des Nutzers als erfolgreich authentifiziert und Bereitstellung des ersten Dienstes an den authentifizierten Nutzer durch das erste Computersystem.

Nach Ausführungsformen verfügt das Bridge-Computersystem über ein Priorisierungsmodul. Das Priorisierungsmodul wählt aus den mehreren Computersystemen, die dem Nutzer über dessen Nutzerkennung im Register zugewiesen sind, dasjenige Computersystem aus um es als das zweite Computersystem zu verwenden, welches eine Bedingung erfüllt. Die Bedingung kann darin bestehen, dass das auszuwählende Computersystem die geringste Prozessorauslastung unter den mehreren Computersystemen hat. Alternativ kann die Bedingung darin bestehen, dass die Prozessorauslastung des auszuwählenden Computersystems unterhalb eines Schwellenwertes liegt. Jedem der mehreren im Register gespeicherten Computersysteme kann eine Sicherheitsstufe zugewiesen sein, wobei die Sicherheitsstufe die Höhe der Anforderungen an einen Nutzer zur Authentifizierung gegenüber dem Authentifizierungssystem des jeweiligen Computersystems angibt. Die Bedingung kann alternativ auch darin bestehen, dass das Authentifizierungssystem des auszuwählenden Computersystem die höchste Sicherheitsstufe aufweist (z.B. im Vergleich zu dem Authentifizierungssystem eines anderen zweiten, dritten oder weiteren Computersystems, die der Nutzerkennung des Nutzers ebenfalls zugeordnet sind), oder darin bestehen, dass das Authentifizierungssystem des zu wählenden Computersystems eine Sicherheitsstufe oberhalb eines Grenzwerts aufweist.

Alternativ kann die Bedingung darin bestehen, dass eine durch den Nutzer editierbare Konfigurationsdatei das auszuwählende Computersystem als priorisiert ausweist. Auch Kombinationen der Bedingungen sind möglich, etwa eine Kombination, wonach das zu wählende Computersystem sowohl eine gewisse Mindestsicherheitsstufe haben muss, und gleichzeitig das am wenigsten ausgelastete Computersystem der in Frage kommenden Computersysteme sein muss. Die Sicherheitsstufe eines Authentisierungssystems zeigt an, wie hoch die technischen und organisatorischen Maßnahmen sind, die sicherstellen, dass Authentifizierungsdaten in unveränderter Form auch wirklich von der Person stammen, für welche die Authentifizierungsdaten ursprünglich, z.B. beim Registrierungsprozess, vorgesehen waren. Die Sicherheitsstufe kann z.B. von der mindestens geforderten Länge und/oder Komplexität von Passwörtern, der Fälschungssicherheit der Authentifizierungsdaten (verschiedene Formen biometrischer Daten, Passwörter, etc.) abhängen, und/oder von technischen Sicherheitsvorkehrungen, welche die Betreiber eines Authentifizierungssystems vorsehen, um eine Manipulation des Authentifizierungssystems durch Dritte zu verhindern. In einem weiteren vorteilhaften Aspekt ist es somit möglich, falls ein Nutzer z.B. sein Passwort für das erste Authentifizierungssystem vergessen hat, gezielt und vollautomatisch ein alternatives Authentifizierungssystem bereitzustellen, welches mindestens den gleichen oder sogar einen höheren Sicherheitsgrad bietet als das erste Authentifizierungssystem. Anstatt dass dem Nutzer, wie bisher üblich, eine unsichere Mail mit Zurücksetzungslink zugesendet wird, kann der Nutzer sich z.B. mittels eines Fingerabdrucks an einem zweiten, besonders sicheren Authentifizierungssystem authentifizieren, und wird daraufhin automatisch auch vom ersten Authentifizierungssystem als berechtigt anerkannt.

Nach Ausführungsformen kann sich der Nutzer gegenüber dem ersten oder dem zweiten Authentifizierungssystems mit Hilfe eines ID-Tokens authentifizieren, wobei weder der ID-Token noch das erste oder zweite Authentifizierungssystem mit einem elD-Provider Computersystem interagieren. Ein Beispiel hierfür sind ID-Token, z.B. spezielle USB-Sticks, die das von Google entwickelte U2F Gnubby Schema unterstützen oder vergleichbare U2F Authentifizierungssysteme. "U2F" bedeutet, dass das besagte ID-Token dem Nutzer erlaubt, sich gegenüber einem oder mehreren Dienst-Computersystemen dadurch auszuweisen, dass er sowohl über bestimmtes Wissen (dienstspezifisches permanentes oder transaktionsbezogenes Passwort, etc.) verfügt als auch physisch im Besitz des ID-Tokens ist ("Zwei Faktoren": Wissen und Besitz). Falls der Nutzer sich z.B. nicht gegenüber dem ersten Authentifizierungssystem authentifizieren kann, da er seinen ID-Token nicht mitführt, aber sich mittels biometrischer Daten ersatzweise bei einem zweiten Authentifizierungssystem authentifizieren kann, ist dies dank Vertrauensvermittlung über das Bridge-Computersystem ausreichend, dass dieser Nutzer dennoch vom ersten Authentifizierungssystem als hinreichender vertrauenswürdig angesehen wird.

Nach Ausführungsformen kann sich der Nutzer gegenüber dem ersten oder dem zweiten Authentifizierungssystems mit Hilfe eines ID-Tokens authentifizieren, wobei in manchen dieser Ausführungsformen auch ein elD-Provider Computersystem bei dem Authentifizierungsprozess involviert sein kann. Im Unterschied zu der im Folgenden beschriebenen Variante II verwendet aber hierbei das Bridge-Computersystem das eID-Provider-Computersystem nicht als Ausweichs-Authentifizierungssystem und führt entsprechend keine Weiterleitung an das eID-Provider-Computersystem durch (das Register enthält keinen Referenzwert zur Durchführung des Verfahrens nach Variante II, dem Bridge-Computersystem ist womöglich auch die Adresse des eID-Provider-Computersystems nicht bekannt).

### Variante II: Verteiltes Authentifizierungssystem mit einem eID-Provider-Computersystem

In einem alternativen Aspekt wird hier ein verteiltes Authentifizierungssystem, welches zumindest ein erstes Computersystem, ein Bridge-Computersystem sowie ein eID Provider-Computersystem umfasst, beschrieben. Das Verfahren nach Variante II ist nicht Teil der Erfindung.

Das erste Computersystem stellt ein erstes Authentifizierungssystem bereit. Außerdem stellt es einen ersten Dienst über ein Netzwerk an einen oder mehrere erfolgreich über das erste Authentifizierungssystem authentifizierte Nutzer bereit.
Das eID-Provider-Computersystem ist mit dem ersten Computersystem über ein Netzwerk verbunden und stellt in Zusammenarbeit mit dem elD-Provider Computersystem ein ID-Token-basiertes Authentifizierungssystem bereit.

Das erste Authentifizierungssystem ist dazu ausgebildet, eine Authentifizierungsanfrage eines Nutzers gegenüber diesem ersten Authentifizierungssystem zu empfangen. Das erste Authentifizierungssystem beinhaltet eine Schnittstelle zum Empfang der Authentifizierungsanfrage von einem dem Nutzer zugeordneten Nutzer-Computersystem. Im Falle eines erfolglosen Authentifizierungsversuchs des Nutzers gegenüber dem ersten Authentifizierungssystem kommuniziert das erste Authentifizierungssystem diesen erfolglosen Authentifizierungsversuch an das Bridge-Computersystem mittels einer ersten Nachricht. Im Falle des Erhalts der ersten Nachricht sendet das Bridge-Computersystem eine Aufforderung zur Eingabe zumindest einer Nutzerkennung an das Nutzer-Computersystem und empfängt in Antwort auf diese Anforderung zumindest die Nutzerkennung vom Nutzer-Computersystem. Zum Beispiel kann die erste Nachricht Daten enthalten, welche es dem Bridge-Computersystem ermöglichen, die Aufforderung an das Nutzer-Computersystem zu richten, z.B. Adressdaten des Nutzer-Computersystems. Das Bridge-Computersystem enthält ein Register, welches eine Identifizierung eines im Register gespeicherten, dem Nutzer zugeordneten Referenzwertes mittels der empfangenen Nutzerkennung ermöglicht.

Das Bridge-Computersystem initiiert die Ausführung eines ID-Token-basierten Authentifizierungssystems zur Authentifizierung des Nutzers gegenüber dem ID-Token-basierten Authentifizierungssystem. Die Ausführung des ID-Token-basierten Authentifizierungssystems umfasst einen Vergleich des identifizierten Referenzwerts mit einem von einem ID-Token empfangenen Datenwert, wobei das ID-Token dem Nutzer, dessen Authentifizierungsversuch gegenüber dem ersten Authentifizierungssystem scheiterte, zugeordnet ist.

Falls der Nutzer sich gegenüber dem ID-Token-basierten Authentifizierungssystem erfolgreich authentifiziert, sendet das Bridge-Computersystem eine Identitäts-Bestätigungsnachricht bezüglich des Nutzers an das erste Authentifizierungssystem. Im Falle eines Erhalts der Identitäts-Bestätigungsnachricht behandelt das erste Authentifizierungssystem den Nutzer als erfolgreich authentifiziert und stellt diesem den ersten Dienst bereit.

Vorteilhaft an dieser Variante des verteilten Authentifizierungssystems ist, analog zu Variante I, dass eine nutzerseitige Speicherung und Verwaltung verschiedener Authentifizierungsdaten für eine Vielzahl von Authentifizierungssystemen bzw. Dienstleistern nicht mehr erforderlich ist. Dies erhöht die Sicherheit, da der Nutzer nicht mehr veranlasst ist, eine Vielzahl von sensiblen Authentifizierungsdaten mit sich zu führen. Außerdem hilft auch Variante II, den gegebenenfalls erheblichen Aufwand, der mit einer manuellen/persönlichen Neuregistrierung bzw. Neuzuweisung von Authentifizierungsdaten verbunden ist, zu vermeiden, ohne dafür auf die im Stand der Technik bekannten, zumeist unsicheren und e-Mail basierten Rücksetzungsmechanismen zurückzugreifen.

Auch Variante II des verteilten Authentifizierungssystems bzw. dessen Komponenten stellen ein modifiziertes "Single Sign-on" System bereit, bei welchem die Hoheit über die einzelnen Authentifizierungssysteme der Dienste, einschließlich des Registrierungsvorgangs, in der Hoheit der einzelnen Dienstanbieter verbleibt, und lediglich im Falle, dass die Authentifizierungsdaten für ein einzelnes, dienstanbietendes Computersystem nicht verfügbar sind, auf einen zentrale, vertrauenswürdige Autorität in Form eines eID-Provider-Computersystems zurückgegriffen wird.

Dies hat zum einen den Vorteil, dass anderen Dienstanbietern, die ja auch gegenläufige geschäftliche Interessen verfolgen können, keinerlei Einflussnahme gestattet wird darauf, ob ein Nutzer, der seine Zugangsdaten nicht verfügbar hat, als vertrauenswürdig angesehen wird oder nicht. Einer potentiellen Manipulation wird damit vorgebeugt: elD-Provider bieten eine sicherheitstechnisch wie organisatorisch hochentwickelte Infrastruktur an, um die Identität bestimmter Personen, die sich einmalig bei diesem eID Provider registriert haben, Dritten gegenüber zweifelsfrei nachzuweisen. Oftmals sind eID Provider hoheitliche oder hoheitlich anerkannte Stellen. Daher stellen eID Provider Computersysteme in geschäftlicher Hinsicht neutrale und in technischer Hinsicht besonders vertrauenswürdige Quellen von Identitätsauskünften dar, die ein technisches Sicherheitsniveau im Hinblick auf eine Identitätsauskunft eines Nutzers bieten, welches die Authentifizierungssysteme "einfacher" Dienstleister wie etwa Online-Kaufhäuser oder soziale Netzwerke in der Regel nicht bieten können.

In einem weiteren Aspekt wird hier ein Bridge-Computersystem, das mit einem eID-Provider-Computersystem operativ verbunden ist, beschrieben. Das Bridge-Computersystem stellt in Zusammenarbeit mit dem eID-Provider-Computersystem ein ID-Token-basiertes Authentifizierungssystem bereit. Das Bridge-Computersystem umfasst ein Register und eine Netzwerkschnittstelle zur Verbindung des Bridge-Computersystems über ein Netzwerk mit ein oder mehreren Nutzer-Computersystemen und mit einem ersten Computersystem wie zuvor bereits für Variante I oder II beschrieben. Die Netzwerkschnittstelle ist dazu ausgebildet, eine erste Nachricht von dem ersten Computersystem zu empfangen, wobei der Empfang der ersten Nachricht einen erfolglosen Authentifizierungsversuch eines der Nutzer gegenüber dem ersten Computersystem anzeigt. Im Falle des Erhalts der ersten Nachricht sendet das Bridge-Computersystem eine Aufforderung zur Eingabe zumindest einer Nutzerkennung, die dem Nutzer zugeordnet ist, an das Nutzer-Computersystem und empfängt zumindest die Nutzerkennung vom Nutzer-Computersystem.

Abweichend von dem für Variante I beschriebenen Register enthält das Register der Variante II Nutzerkennungen, die jeweils mit ein oder mehreren Referenzwerten verknüpft gespeichert sind. Das Bridge-Computersystem identifiziert einen in dem Register gespeicherten Referenzwert anhand der empfangenen Nutzerkennung. Das Bridge-Computersystem initiiert die Ausführung des ID-Token-basierten Authentifizierungssystems zur Authentifizierung des Nutzers gegenüber dem ID-Token-basierten Authentifizierungssystem. Die Ausführung des ID-Token-basierten Authentifizierungssystems umfasst einen Vergleich des identifizierten Referenzwerts mit einem von einem dem Nutzer zugeordneten ID-Token empfangenen Datenwert. Der Vergleich kann z.B. als Vergleich auf Identität ausgebildet sein. Im Falle einer erfolgreichen Authentifizierung des Nutzers gegenüber dem ID-Token-basierten Authentifizierungssystem kommuniziert das Bridge-Computersystem eine Identitäts-Bestätigungsnachricht bezüglich des Nutzers an das erste Authentifizierungssystem um das erste Computersystem zu veranlassen, den Nutzer als erfolgreich authentifiziert zu behandeln und diesem den ersten Dienst bereitzustellen.

Nach Ausführungsformen besteht die operative Verbindung darin, dass das Bridge-Computersystem mit dem eID-Provider-Computersystem über das Netzwerk verbunden ist. Das Netzwerk kann z.B. ein jedermann offenstehendes Netzwerk sein, z.B. das Internet.

Alternativ dazu kann die operative Verbindung auf einem Intranet eines sicherheitstechnisch geschützten Rechenzentrums beruhen. Dies erhöht die Sicherheit, da die Kommunikation zwischen Bridge-Computersystem und eID-Provider-Computersystem innerhalb eines geschützten Netzwerks stattfindet.

Alternativ dazu beruht die operative Verbindung darauf, dass das eID-Provider-Computersystem und das Bridge-Computersystem jeweils als Hardware- und/oder Firmware-Modul ausgestaltet sind, welche beide Bestandteil eines einzelnen Datenverarbeitungsgerätes, z.B. eines Servercomputers, darstellen. Dies erhöht die Sicherheit weiterhin, und bietet zudem den Vorteil, dass die Hardware bzw. Firmware des integrierten Datenverarbeitungsgerätes auf ein schnelles und reibungsloses Zusammenwirken beider Funktionalitäten (die des Bridge-Computersystems und des elD-Provider Computersystems) hin optimiert werden kann. Außerdem wird das Token-basierte Authentifizierungssystem erheblich beschleunigt, da die Datenübertragung zwischen der Bridge-Computersystem-Komponente und der integrierten "eID-Provider Computersystem-Komponente" über einen Systembus geschehen kann, der eine erheblich höhere Bandbreite als das Internet hat. Zusätzliche Sicherheitsvorkehrungen wie etwa das Aushandeln von Sitzungsschlüsseln können weggelassen werden.

Nach Ausführungsformen beinhaltet das verteilte Authentifizierungssystem auch das ID-Token des Nutzers oder die ID-Token mehrerer Nutzer, die sich über deren jeweilige Nutzer-Computersysteme für einen oder mehrere Dienste registriert haben.

In einem weiteren Aspekt wird hier ein computerimplementiertes Verfahren zur Authentifizierung eines Nutzers gegenüber einem ersten Computersystem beschrieben. Das Verfahren umfasst:
- Senden einer Authentifizierungsanfrage des Nutzers von einem dem Nutzer zugeordneten Nutzer-Computersystem an ein erstes Authentifizierungssystem eines ersten Computersystems. Das erste Computersystem stellt einen ersten Dienst über ein Netzwerk an einen oder mehrere erfolgreich über das erste Authentifizierungssystem authentifizierte Nutzer bereit;
- Empfang der Authentifizierungsanfrage durch das erste Computersystem;
- im Falle eines erfolglosen Authentifizierungsversuchs des Nutzers gegenüber dem ersten Authentifizierungssystem, Senden einer ersten Nachricht von dem ersten Computersystem an ein Bridge-Computersystem;
- Empfang der ersten Nachricht durch das Bridge-Computersystem, wobei das Bridge-Computersystem ein Register enthält;
- in Antwort auf den Erhalt der ersten Nachricht, Senden einer Aufforderung zur Eingabe einer dem Nutzer zugeordneten Nutzerkennung vom Bridge-Computersystem an das Nutzer-Computersystem um zumindest die Nutzerkennung vom Nutzer-Computersystem zu empfangen;
- Identifikation eines im Register gespeicherten Referenzwertes mittels der empfangenen Nutzerkennung des Nutzers durch das Bridge-Computersystem;
- Initiierung der Ausführung eines ID-Token-basierten Authentifizierungssystems zur Authentifizierung des Nutzers gegenüber dem ID-Token-basierten Authentifizierungssystem. Die Durchführung des ID-Token-basierten Authentifizierungssystems umfasst einen Vergleich des identifizierten Referenzwerts mit einem Datenwert, wobei der Datenwert durch ein dem Nutzer zugeordnetes ID-Token generiert wird oder von diesem ID-Token ausgelesen wird;
- Falls der Nutzer sich gegenüber dem ID-Token-basierten Authentifizierungssystem erfolgreich authentifiziert hat, Senden einer Identitäts-Bestätigungsnachricht bezüglich des Nutzers vom Bridge-Computersystem an das erste Authentifizierungssystem;
- in Antwort auf den Erhalt der Identitäts-Bestätigungsnachricht, Behandlung des Nutzers als erfolgreich authentifiziert und Bereitstellung des ersten Dienstes an den authentifizierten Nutzer durch das erste Computersystem.

Nach Ausführungsformen umfasst die Ausführung des ID-Token-basierten Authentifizierungssystems jeweils eine Authentifizierung des Nutzers gegenüber dem ID-Token sowie eine Authentifizierung des eID-Provider-Computersystems gegenüber dem ID-Token. Im Falle einer erfolgreichen Authentifizierung sowohl des Nutzers als auch des eID-Provider-Computersystems gegenüber dem ID-Token beinhaltet das Verfahren ferner:
- Berechnung des Datenwertes durch den Prozessor des ID-Tokens;
- Übertragung des Datenwertes vom ID-Token an das eID-Provider-Computersystem;
- Übertragung des Datenwertes vom eID-Provider-Computersystem an das Bridge-Computersystem;
- Prüfung auf Übereinstimmung des anhand der Nutzerkennung identifizierten und im Register gespeicherten Referenzwertes mit dem vom eID-Provider-Computersystem übertragenen Datenwert durch das Bridge-Computersystem;
- wobei im Falle der Übereinstimmung der Nutzer als erfolgreich gegenüber dem ID-Token-basierten Authentifizierungssystem authentifiziert gilt.
Dies kann vorteilhaft sein, da der Datenwert, der mit dem Referenzwert verglichen wird, nicht ein in dem ID-Token gespeicherter Wert ist, sondern dynamisch beim Authentifizierungsvorgang durch das ID-Token berechnet und an das Bridge-Computersystem übertragen wird. Der Referenzwert kann also nicht von Dritten, die z.B. unberechtigterweise in den Besitz des ID-Tokens gelangt sind, ausgelesen werden, denn der Wert wird nur nach erfolgreicher Authentifizierung des berechtigten Nutzers, z.B. mittels einer PIN, berechnet. Dieser Datenwert kann z.B. im Zuge des Registrierungsprozesses vom ID-Token berechnet werden und als Referenzwert in dem Register des Bridge-Computersystems in Verbindung mit einer Nutzerkennung gespeichert werden. Bei jeder Authentifizierung des Nutzers gegenüber dem ID-Token-basierten Authentifizierungssystem wird der Datenwert durch den Prozessor des ID-Tokens neu berechnet um an das Bridge-Computersystem übermittelt und mit dem Referenzwert verglichen zu werden. Diese Ausführungsform erhöht also die Sicherheit des Verfahrens, insbesondere schützt sie vor unberechtigter Authentifizierung durch einen Dieb des ID-Tokens. Der Datenwert kann zum Beispiel aus einer Kennung des ID-Tokens berechnet werden. Zum Beispiel könnte das ID-Token als elektronischer Personalausweis ausgebildet sein, die Nutzerkennung könnte durch den "restricted identifyer" (RID) eines als ID-Token verwendeten Personalausweises des Nutzers bestehen. Die RID ist eindeutig für den Personalausweis und damit auch eindeutig für den Nutzer. Die Ableitungsfunktion kann aus jeder beliebigen, vorzugsweise injektiven Ableitungsfunktion bestehen.

Nach Ausführungsformen umfasst die Berechnung des Datenwertes durch den Prozessor des ID-Tokens:
- Empfang eines Berechtigungszertifikats, welches dem Bridge-Computersystem zugeordnet ist, durch den ID-Token. Das Berechtigungszertifikat enthält einen öffentlichen Schlüssel des Bridge-Computersystems; zum Beispiel wird es dem ID-Token dadurch möglich, durch Prüfung dieses Zertifikats sicherzustellen, dass das Bridge-Computersystem vertrauenswürdig ist;
- Anwendung einer Ableitungsfunktion, welche mit Hilfe eines privaten Schlüssels des ID-Tokens aus dem öffentlichen Schlüssel des Bridge-Computersystems den Datenwert ableitet, wobei der Datenwert nicht nur für den Nutzer sondern auch für das Bridge-Computersystem spezifisch ist.

Auch in dieser Ausführungsform erfolgt, vorzugsweise im Zuge der erstmaligen Registrierung des Nutzers, eine Initiale Berechnung und Speicherung des Referenzwertes mittels der Ableitungsfunktion durch das ID-Token.

Nach Ausführungsformen umfasst das Verfahren ferner einen Schritt des Signierens des Datenwertes vor dessen Übertragung an das Bridge-Computersystem durch das eID-Provider-Computersystem. Zur Signierung wird ein privater Schlüssel des eID-Provider-Computersystems verwendet. Wer Datenwert wird in signierter Form von dem eID Provider-Computersystem an das Bridge-Computersystem übertragen. Der Nutzer gilt nur dann als erfolgreich durch das ID-Token-basierte Authentifizierungssystem authentifiziert, wenn das Bridge-Computersystem zusätzlich mittels einer Signaturprüfung die Validität der Signatur feststellt. Dies kann zum Beispiel dadurch geschehen, dass dem Bridge-Computersystem ein öffentlicher Schlüssel bekannt ist, welcher zusammen mit dem zur Signierung verwendeten privaten Schlüssel ein asymmetrisches kryptographisches Schlüsselpaar bildet.

Nach Ausführungsformen hat das eID-Provider-Computersystem zumindest ein Zertifikat gespeichert, welches Attributangaben beinhaltet. Diese Attributangaben beinhalten eine Angabe derjenigen durch den ID-Token bereitgestellten (d.h., gespeicherten und/oder berechneten) Attribute, für deren entsprechende Attributwerte das eID-Computersystem eine Lese- oder Empfangs-Berechtigung hat. Die Authentifizierung des eID-Provider-Computersystems gegenüber dem ID-Token umfasst:
- Übertragung eines Zertifikats vom eID-Provider-Computersystem an den ID-Token, wobei der von dem Prozessor des ID-Token berechnete Datenwert ein Attributwert eines dieser in dem Zertifikat angegebenen Attribute darstellt;
- Prüfung, durch den ID-Token anhand des übertragenen Zertifikats, ob das eID-Provider-Computersystem eine erforderliche Berechtigung für den Empfang des berechneten Datenwerts hat, bevor dieser Datenwert berechnet und an das eID-Provider-Computersystem übertragen wird.

Diese Merkmale können vorteilhaft sein, da sie sicherstellen, dass der Datenwert, welcher zur Authentifizierung des Nutzers gegenüber dem ID- -Token-basierten Authentifizierungssystem dient, nur dann berechnet wird und den Prozessor des ID-Tokens beansprucht, wenn das eID-Provider-Computersystem auch zum Empfang dieses zu berechnenden Datenwertes berechtigt ist.

Nach manchen Ausführungsformen besitzt das ID-Token Mittel für eine Ende-zu-Ende-Verschlüsselung um eine Verbindung zwischen dem ID-Token und dem eID-Provider-Computersystem über das Nutzer-Computersystem aufzubauen. Das Zertifikat mit den Attributsangaben und/oder der gespeicherte oder berechnete Datenwert werden über die Ende-zu-Ende-verschlüsselte Verbindung übertragen. Der Nutzer hat aufgrund der Ende-zu-Ende-Verschlüsselung keine Möglichkeit die über die Verbindung übertragenen Daten zu ändern, was die Sicherheit des Verfahrens weiter erhöht.

### Varianten I und II: weitere Ausführungsformen

Im Folgenden soll auf Ausführungsformen und Aspekte eingegangen werden, welche sowohl auf der Basis der Lehre von Variante I wie auch auf Basis der Lehre von Variante II realisiert werden können, wobei Variante II nicht Teil der Erfindung ist.

In einer weiteren Ausführungsform betrifft die Erfindung ein computerimplementiertes Verfahren, wobei das erste

Computersystem und das Bridge-Computersystem von unterschiedlichen Personen oder Organisationen betrieben werden. Die Implementierung des Authentifizierungssystems ist ausschließlich den Verfügungen des Betreibers des jeweiligen Computersystems unterworfen.

Nach Ausführungsformen behandelt das erste Authentifizierungssystem den Nutzer nach Erhalt der Identität-Bestätigungsnachricht nicht nur als erfolgreich authentifiziert, sondern stellt dem Nutzer automatisch eine Möglichkeit zur Verfügung, seine Authentifizierungsdaten für das erste Authentifizierungssystem neu zu setzen oder zumindest einzusehen.

Nach Ausführungsformen beinhaltet das erste Computersystem zusätzlich sämtliche oben beschriebenen funktionalen Fähigkeiten des zweiten Computersystems und das zweite Computersystem verfügt über sämtliche oben beschriebenen funktionalen Fähigkeiten des ersten Computersystems. Dies bedeutet, dass das zweite Authentifizierungssystem des zweiten Computersystems automatisch als alternatives Authentifizierungssystem erkannt und verwendet wird, falls die eigentlich von Nutzer intendierte Authentifizierung gegenüber dem ersten Authentifizierungssystem fehlschlägt, dass aber umgekehrt auch das erste Authentifizierungssystem des ersten Computersystems automatisch als alternatives Authentifizierungssystem erkannt und verwendet wird, falls eine eigentlich vom Nutzer intendierte Authentifizierung gegenüber dem zweiten Authentifizierungssystem (zur Nutzung des zweiten Dienstes) fehlschlägt.

Nach Ausführungsformen beinhaltet das erste ein erstes Applikationsprogramm, das mit einem zweiten Applikationsprogramm des Bridge-Computersystems interoperiert, um die beschriebenen Datenaustauschschritte zwischen erstem Computersystem und Bridge-Computersystem zu bewirken. Das erste Applikationsprogramm ist also in der Lage, die erste Nachricht an das Bridge-Computersystem zu senden und die Identitäts-Bestätigungsnachricht vom Bridge-Computersystem zu empfangen. Außerdem ist es in der Lage, so mit dem ersten Authentifizierungssystem zu interoperieren, dass es ein Scheitern eines Authentifizierungsversuchs eines Nutzers gegenüber dem ersten Authentifizierungssystem registriert und daraufhin die erste Nachricht versendet und nach Erhalt der Identitäts-Bestätigungsnachricht das erste Authentifizierungssystem veranlasst, den Nutzer als authentifiziert zu betrachten.

Im Falle der Variante I besitzt nach Ausführungsformen das erste Applikationsprogramm zusätzlich zu diesen besagten Programmfunktionalitäten auch noch folgende Programmfunktionalitäten: eine Schnittstelle, um von dem Bridge-Computersystem einen Befehl zur Initiierung eines Authentifizierungsprozesses eines Nutzers gegenüber dem ersten Authentifizierungssystem einzuleiten. Die Ausführung des ersten Authentifizierungssystems kann also zum Einen initiiert werden, wenn sich ein Nutzer gegenüber dem ersten Authentifizierungssystem authentifizieren will um den ersten Dienst zu nutzen. Zum Anderen kann sie durch das erste Applikationsprogramm initiiert werden, wobei das erste Applikationsprogram zu dieser Initiierung durch das Bridge-Computersystem veranlasst wird, wenn ein Nutzer sich nicht gegenüber einem anderen Authentifizierungssystem authentifizieren konnte. Über die Schnittstelle kann das erste Applikationsprogramm z.B. Adressdaten des Nutzer-Computersystems empfangen um mit dem Nutzer des Nutzer-Computersystems einen Authentifizierungsprozess gegenüber dem ersten Authentifizierungssystem zu starten. Über diese Schnittstelle kann das erste Applikationsprogramm dem Bridge-Computersystem das Ergebnis dieses Authentifizierungsprozesses mitteilen. Dadurch übernimmt das erste Computersystem bzw. das erste Authentifizierungssystem die Funktion eines alternativen Authentifizierungssystems. Das erste Applikationsprogramm kann zum Einen also bewirken, dass ein auf dem gleichen Computersystem installiertes Authentifizierungssystem einen Nutzer, der sich nicht authentifizieren konnte, automatisch auf andere Authentifizierungssysteme als Ausweich-Authentifizierungssystem umgeleitet wird, und zum anderen, dass das auf dem gleichen Computersystem installiertes Authentifizierungssystem als Ausweich-Authentifizierungssystem für die Authentifizierungssysteme anderer Dienstanbieter fungiert. Das erste Applikationsprogramm kann auf dem ersten, zweiten und ggf. noch weiteren Computersystemen, die jeweils einen Dienst anbieten, installiert sein, so dass jedes der Authentifizierungssysteme dieser Computersysteme als ,Rückfall'-Authentifizierungssystem für die anderen Authentifizierungssysteme einsetzbar ist. Das erste Applikationsprogramm kann nach Ausführungsformen unabhängig von dem Authentifizierungssystem welches ebenfalls auf dem Computersystem läuft, installiert und deinstalliert werden. Dies kann vorteilhaft sein, da das erste Applikationsprogramm dadurch bestehende Authentifizierungssysteme, insb. Legacy- Authentifizierungssysteme, im Wesentlichen unverändert belassen kann und dennoch eine Interaktion zwischen Authentifizierungssystem und dem zweiten Applikationsprogramm auf dem Bridge-Computersystem ermöglicht.

Der Datenaustausch zwischen dem ersten und zweiten Applikationsprogramm kann z.B. auf EJB Technologie, Remote Procedure Calls, der .NET Plattform oder einem anderen Framework beruhen.

Nach Ausführungsformen wird die Authentifizierungsanfrage über eine erste Kommunikationsverbindung übertragen. Die erste Kommunikationsverbindung besteht zwischen dem Nutzer-Computersystem und dem ersten Computersystem. Das Bridge-Computersystem baut nach Erhalt der ersten Nachricht eine zweite Kommunikationsverbindung zwischen dem Nutzer-Computersystem und dem Bridge-Computersystem auf. Im Falle der Variante I baut das Bridge-Computersystem zur Initiierung der Ausführung des zweiten Authentifizierungssystems eine dritte Kommunikationsverbindung zwischen dem Nutzer-Computersystem und dem zweiten Computersystem auf und baut im Falle einer erfolgreichen Authentifizierung des Nutzers gegenüber dem zweiten Authentifizierungssystem die erste Kommunikationsverbindung wieder auf. Im Falle der Variante II baut das Bridge-Computersystem zur Initiierung der Ausführung des ID-Token-basierten Authentifizierungssystems eine dritte Kommunikationsverbindung zwischen dem Nutzer-Computersystem und dem eID-Provider-Computersystem auf und baut im Falle einer erfolgreichen Authentifizierung des Nutzers gegenüber dem ID-Token-basierten Authentifizierungssystem die erste Kommunikationsverbindung wieder auf.

Nach Ausführungsformen ist die erste, zweite und/oder dritte Kommunikationsverbindung vorzugsweise geschützt, z.B. mittels SSH Verschlüsselung oder einem anderen Verschlüsselungsverfahren.

Nach Ausführungsformen beruht der Aufbau der zweiten Kommunikationsverbindung auf einer Weiterleitung des Nutzer-Computersystems auf eine Adresse des Bridge-Computersystems. Der Aufbau der dritten Kommunikationsverbindung zwischen Nutzer-Computersystem und zweitem Computersystem beruht im Falle der Variante I auf einer Weiterleitung des Nutzer-Computersystems auf die identifizierte Adresse, z.B. einer URL, des zweiten Computersystems. Im Falle der Variante II beruht der Aufbau der dritten Kommunikationsverbindung zwischen Nutzer-Computersystem und eID-Provider-Computersystem auf einer Weiterleitung des Nutzer-Computersystems auf eine Adresse, z.B. einer URL, des eID-Provider-Computersystems. Die Wiederherstellung der ersten Kommunikationsverbindung beruht auf einer Weiterleitung des Nutzer-Computersystems auf eine Adresse, z.B. einer URL oder IP Adresse, des ersten Computersystems durch das Bridge-Computersystem. Vorzugsweise beruht die Weiterleitung auf einem URL Redirect eines auf dem Nutzer-Computersystem ausgeführten Browsers oder eines anderen HTML fähigen Clients. Die Weiterleitung kann auf dem http oder https Protokoll basieren und als Domainweiterleitung implementiert sein.

Nach Ausführungsformen nutzt das Bridge-Computersystem eine im Zuge des erfolglosen Authentifizierungsversuchs zwischen dem Nutzer-Computersystem und dem ersten Computersystem vereinbarte Session-ID zum Aufbau der zweiten und dritten Kommunikationsverbindung und/oder nutzt die Session-ID um mit der Session-ID assoziierte Parameterwerte temporär und/oder persistent zu speichern. Dies ist vorteilhaft, da sitzungsbezogene Daten des erfolglosen Authentifizierungsversuchs während des gesamten Authentifizierungsprozesses zur Verfügung stehen, also nach dem Wiederaufbau der ersten Kommunikationsverbindung durch den Nutzer nicht erneut eingegeben werden müssen. Die Eröffnung einer weiteren Session zur Authentifizierung mittels der Identitäts-Bestätigungsnachricht wird vermieden. Dies beschleunigt das Verfahren, erhöht den Bedienkomfort und reduziert den Datenverkehr, da der Nutzer die Parameterwerte nicht erneut eingeben muss.

In einem weiteren Aspekt wird ein nicht beanspruchtes, computerimplementiertes, nicht-flüchtiges Speichermedium beschrieben. Das Speichermedium enthält computerinterpretierbare Instruktionen. Bei Ausführung der Instruktionen durch einen Prozessor führt der Prozessor das computerimplementierte Verfahren nach einem der vorigen Ausführungsformen aus. Das Speichermedium kann dabei selektiv nur die Instruktionen zur Ausführung der durch das Bridge-Computersystem auszuführenden Schritte oder nur der durch das erste Computersystem auszuführenden Schritte oder nur der durch das zweite Computersystem auszuführenden Schritte umfassen. Alternativ dazu kann das Speichermedium auch ein verteiltes Speichermedium sein, welches sämtliche der durch das erste Computersystem, zweite Computersystem und das Bridge-Computersystem auszuführenden Schritte in Form gespeicherter computerinterpretierbarer Instruktionen beinhaltet.

Im Weiteren werden Ausführungsformen der Erfindung mit Bezugnahme auf die Zeichnungen näher erläutert. Es zeigen:
- Figur 1a: ein Blockdiagramm eines verteilten Authentifizierungssystems nach Variante I,
- Figur 1b: ein Blockdiagramm eines Bridge-Computersystems nach Variante I,
- Figur 2a: ein Blockdiagramm eines verteilten Authentifizierungssystems nach Variante II, wobei Variante II nicht Teil der Erfindung ist,
- Figur 2b: ein Blockdiagramm eines Bridge-Computersystems nach Variante II, wobei Variante II nicht Teil der Erfindung ist,
- Figur 3: ein Blockdiagramm eines ID-Tokens,
- Figur 4: ein Prozessdiagramm des Datenaustausches in einem verteilten Authentifizierungssystem nach Variante I, und
- Figur 5: ein Prozessdiagramm des Datenaustausches in einem verteilten Authentifizierungssystem nach Variante II, wobei Variante II nicht Teil der Erfindung ist.

Elemente der nachfolgenden Ausführungsformen, die einander entsprechen, werden mit denselben Bezugszeichen gekennzeichnet.

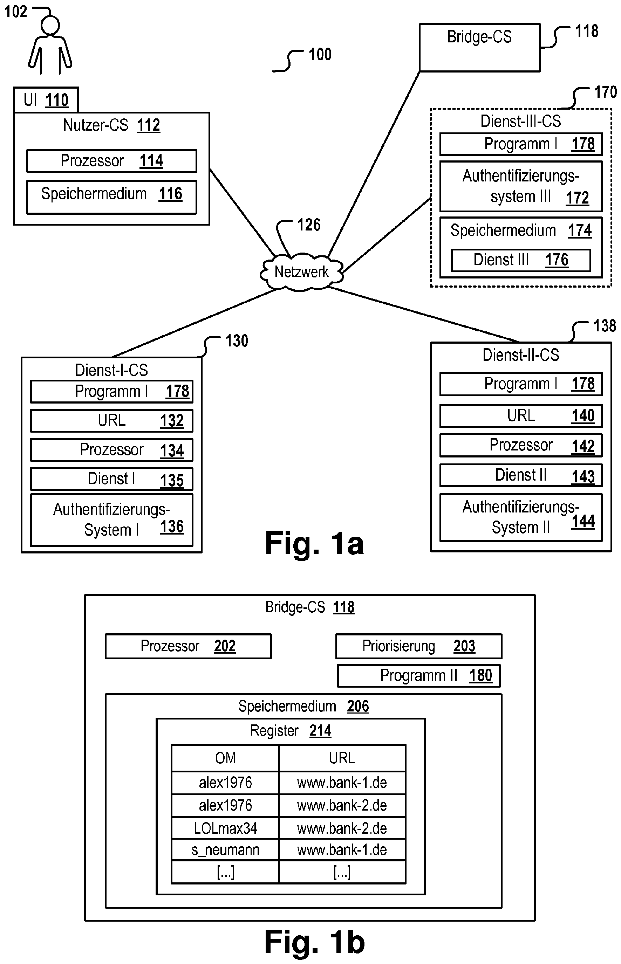

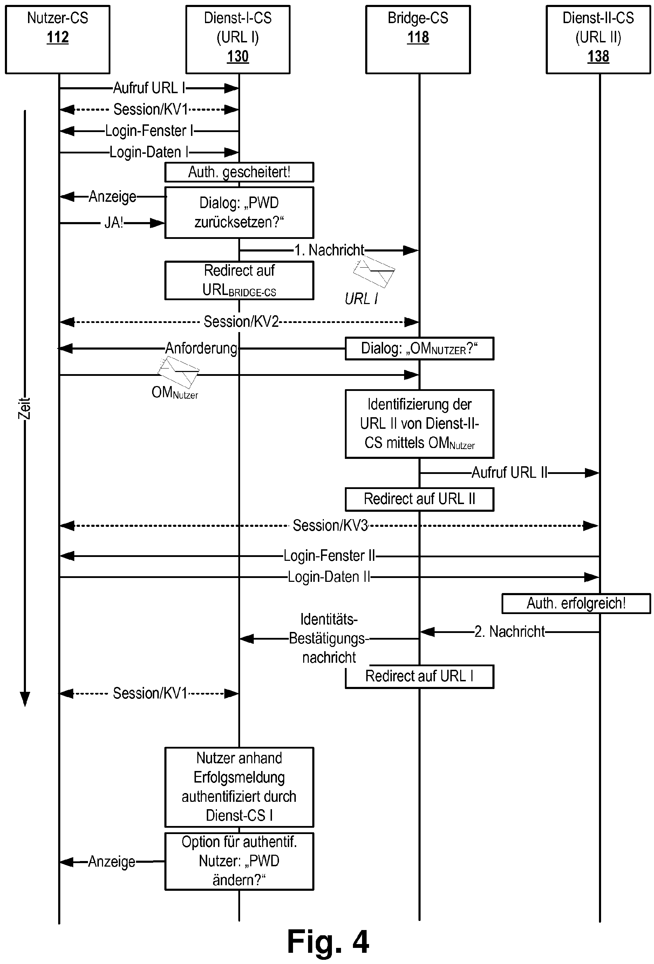

**Die** **Figur 1a** zeigt ein verteiltes Authentifizierungssystem 100 nach Variante I. Anhand von Fig. 1a wird im Folgenden unter zu Hilfename von **Figur 4** beschrieben, wie der Nutzer 102 sich gegenüber einem bestimmten Dienst 135 eines ersten Computersystems 130 authentifizieren kann, obwohl der Nutzer die eigentlich für die Authentifizierung gegenüber dem ersten Authentifizierungssystem 136 erforderlichen Authentifizierungsdaten nicht verfügbar hat.

Dem Nutzer 102 ist ein Nutzer-Computersystem 112 mit einem Prozessor 114 und einem Speichermedium 116 zugeordnet. Das Nutzer-Computersystem hat eine Schnittstelle 110 zur Eingabe von Authentifizierungsdaten, also zum Beispiel eine graphische Benutzeroberfläche und/oder, im Falle von biometrischen Daten, einen Fingerabdrucksensor, eine Kamera, ein Mikrofon oder dergleichen. Bei den Authentifizierungsdaten kann es sich zum Beispiel um ein Passwort handeln, es sind jedoch auch eine Vielzahl anderer Typen von Authentifizierungsdaten möglich, zum Beispiel biometrische Daten (Fingerabdruck, Iris-Scan, Gesichtserkennung, Tastatureingabe-Muster, etc.) und/oder ID-Token (USB-Sticks, Sicherheitsdokumente wie etwa der elektronische Personalausweis, etc.).

Das verteilte Authentifizierungssystem umfasst ein Bridge-Computersystem 118, dessen Komponenten in Figur 1b im Einzelnen erläutert sind. Außerdem umfasst es ein erstes Computersystem 130 und ein zweites Computersystem 138 und kann optional noch weitere Computersysteme, zum Beispiel ein drittes Computersystem 170 umfassen.

Das erste Computersystem 130 besitzt eine Adresse 132 und einen Prozessor 134 und stellt einen ersten Dienst 135 bereit, den der Nutzer 102 in Anspruch nehmen möchte. Bei dem Dienst kann es sich zum Beispiel um eine Bankdienstleistung handeln, die dem Nutzer 102 ermöglicht, eine Überweisung per online-Banking zu tätigen. Das erste Computersystem, ein Server einer Bank, erfordert hierzu die Authentifizierung des Nutzers 102 über die Schnittstelle 110. Dies kann zum Beispiel dadurch erfolgen, dass das erste Authentifizierungssystem als Web-Applikation ausgebildet ist, welche ein HTML basiertes Formular zur Eingabe von Authentifizierungsdaten (Benutzername, Passwort und gegebenenfalls noch weitere Daten) generiert. Dieses elektronische Eingabeformular bzw. der dem Formular zu Grunde liegende HTML Code wird über das Netzwerk 126 an das Nutzer-Computersystem 112 übertragen und dort dem Nutzer innerhalb eines Browsers oder eines anderen HTML-fähigen Clientprogrammes präsentiert. Die Übertragung dieses HTML Formulars kann zum Beispiel von dem Nutzer dadurch initialisiert werden, dass der Nutzer eine entsprechende URL der Bankdienstleistung in seinen Browser eingibt. Das Formular kann mittels verschiedener Programmiertechniken (Java Script, Java Server Pages, Servlets, Java EJB, Ruby etc.) bereitgestellt werden.

Vorzugsweise wird eine erste Sitzung zwischen dem Nutzer-Computersystem und dem ersten Computersystem vereinbart, Sitzungsschlüssel generiert und ein sicherer, verschlüsselter erster Kommunikationskanal KV1 aufgebaut (siehe Figur 4). Dies dient der sicheren Übertragung der Authentifizierungsdaten, insbesondere des Passworts, an das erste Authentifizierungssystem 136 des ersten Computersystems 130.

Vorliegend hat jedoch der Nutzer 102 sein Passwort für das erste Authentifizierungssystem und damit für die Bankdienstleistung 135 falsch verinnerlicht und gibt mehrfach ein falsches Passwort ein. Alternativ dazu kann dem Nutzer 102 auch von vornherein bewusst sein, dass er das Passwort für die Bankdienstleistung vergessen hat. Das HTML Formular kann einen Button mit der Aufschrift "Passwort zurücksetzen" oder "Passwort neu anfordern nach Verlust" oder dergleichen beinhalten und der Nutzer könnte diesen Button wählen. Alternativ dazu kann dieser Button auch erst nach mehrmaliger Falscheingabe des Passworts angezeigt werden. In jedem Fall gibt die Interaktion des Nutzers mit dem Formular des Bankdienstleisters zu erkennen, dass der Nutzer das benötigte Passwort nicht verfügbar hat, was einem gescheiterten Authentifizierungsversuch entspricht.

Nachdem das erste Authentifizierungssystem 136 also festgestellt hat, dass ein Authentifizierungsversuch eines bestimmten Nutzers 102, von dem zumindest eine Adresse des Nutzer-Computersystems 112 bekannt ist, gescheitert ist, generiert das dienstanbietende erste Computersystem eine erste Nachricht und sendet diese über das Netzwerk 126 an ein Bridge-Computersystem 118. Die erste Nachricht enthält zumindest solche Angaben, die dem Bridge-Computersystem das Senden einer Anforderung zum Erhalt der Nutzerkennung an das Nutzer-Computersystem ermöglichen.

Das Bridge-Computersystem empfängt die erste Nachricht, sendet eine Anforderung zum Erhalt der Nutzerkennung an das Nutzer-Computersystem und empfängt schließlich auch die Nutzerkennung über das Netzwerk. Vorzugsweise wird vor der Übermittlung der Nutzerkennung ein sicherer Datenübertragungskanal KV2 zwischen dem Nutzer-Computersystem und dem Bridge-Computersystem aufgebaut. Das Bridge-Computersystem identifiziert mithilfe eines Registers 214 ein zweites Computersystem 138, das mit dem Bridge-Computersystem über das Netzwerk 126 verbunden ist und dem Nutzer 102 in dem besagten Register ebenfalls zugeordnet ist. Eine Zuordnung von einem Nutzer und einem Computersystem 130,138,170 impliziert, dass der Nutzer sich bei jedem dieser Computersysteme bzw. dem Authentifizierungssystem jedes dieser Computersysteme bereits registriert hat und also im Prinzip in der Lage sein sollte, sich gegenüber diesen Computersystemen/Authentifizierungssystemen zu authentifizieren. Anhand der Nutzerkennung und des Registers 214 ermittelt das Bridge-Computersystem eine Adresse, zum Beispiel eine URL, eines anderen Computersystems 138, von welchen ausgegangen werden kann, dass dessen Authentifizierungssystem 144 als Ausweichs-Authentifizierungssystem herangezogen werden kann. Die identifizierte Adresse des Computersystems 138, welches das Ausweichs-Authentifizierungssystem 144 bereitstellt und im Folgenden auch als "zweites Computersystem" bezeichnet wird, wird vom Bridge-Computersystem verwendet um einen dritten Kommunikationskanal KV3 aufzubauen, welcher vorzugsweise ebenfalls geschützt ist. Das zweite Computersystem könnte zum Beispiel ein Server einer weiteren Bank sein, die eine andere Bankdienstleistung 143 zur Verfügung stellt. Es könnte sich aber auch um den Server eines Onlineshop-Betreibers handeln, der einen Onlineshop 143 über das Netz bereitstellt. Die Art des Dienstes 143, der von dem zweiten Computersystem zur Verfügung gestellt wird, ist an sich unbeachtlich, da es dem Nutzer ja darum geht, den ersten Dienst 135 in Anspruch zu nehmen.

Der Aufbau des dritten Kommunikationskanals könnte derart erfolgen, dass das zweite Dienstcomputersystem 138 ein zweites Authentifizierungssystem 144 in Form einer Webapplikation bereitstellt. Das Bridge-Computersystem könnte in einer weiteren Nachricht eine Adresse des Nutzer-Computersystems an das zweite Computersystem 138 übermitteln. Die Webapplikation des zweiten Computersystems könnte ein weiteres HTML Formular generieren und dieses Formular bzw. den HTML Code, der dem Formular zu Grunde legt, an die Adresse des Nutzer-Computersystems senden. Dort wird dieses Formular in dem Browser des Nutzers oder in einem HTML-fähigen Clientprogramm, das mit dem zweiten Authentifizierungssystem 144 interoperabel ist, dargestellt. In Figur 4 ist die Generierung, Übertragung und Darstellung dieses HTML Formulars mit dem Stichwort "Login-Fenster II" bezeichnet. Sofern der Nutzer zumindest seine Login-Daten für das zweite Authentifizierungssystem 144 noch kennt, kann er sich mit diesen Daten gegenüber dem zweiten Authentifizierungssystem authentifizieren. Das zweite Authentifizierungssystem wirkt somit als automatisch erkanntes und initialisiertes Ausweichs-Authentifizierungssystem, ist aber ansonsten von dem ersten Authentisierungssystem organisatorisch und sicherheitstechnisch getrennt.
Nach erfolgreicher Authentifizierung des Nutzers 102 gegenüber dem zweiten Authentifizierungssystem 144 sendet das zweite Authentifizierungssystem, also zum Beispiel die Webapplikation, eine zweite Nachricht an das Bridge-Computersystem mit dem Inhalt, dass der Nutzer sich gegenüber dem zweiten Authentifizierungssystem erfolgreich authentifiziert hat.

Falls auch dieser Authentifizierungsversuch gegenüber dem zweiten Authentifizierungssystem scheitern sollte, wird dies in manchen Implementierungsbeispielen ebenfalls an das Bridge-Computersystem kommuniziert. Das Bridge-Computersystem sucht in diesem Fall in dem Register 214 Nach weiteren Computersystemen, welche ein alternatives Authentifizierungssystem bereitstellen könnten, zum Beispiel das dritte Computersystem 170, und initiiert die Ausführung des dritten Authentifizierungssystems 172, um dem Nutzer ein Login-Fenster für das dritte Authentifizierungssystem anzuzeigen. Eine im Prinzip beliebig lange Kaskade alternativer Authentifizierungssysteme kann auf diese Art initiiert werden, solange, bis der Nutzer sich gegenüber einem der alternativen Authentifizierungssysteme erfolgreich authentifizieren kann und dies als Nachweis der Vertrauenswürdigkeit des Nutzers gegenüber dem ersten Authentifizierungssystem kommuniziert wird. Diese Kaskade an alternativ initiierten Authentifizierungssystemen könnte z.B. in einer bestimmten Reihenfolge geschehen, z.B. angefangen von einem Authentifizierungssystem mit der höchsten Sicherheitsstufe bis hin zu einer Sicherheitsstufe, die gleichwertig oder geringer zu der des ersten Authentifizierungssystems ist.

Nach Erhalt der Identität-Bestätigungsnachricht durch das erste Authentifizierungssystem behandelt das erste Authentifizierungssystem den Nutzer 102 als gegenüber dem ersten Authentifizierungssystem 136 authentifiziert und stellt den angeforderten ersten Dienst 135 bereit. Der Nutzer erhält also über seinen Browser bzw. über eine auf dem Nutzer-Computersystem 112 ausgeführte Client-Applikation, die mit der Dienstapplikation 135 interoperabel ist, die Möglichkeit, eine Bank Transaktionen durchzuführen. Zusätzlich kann dem Nutzer in dem Browser bzw. in der Client-Applikation eine Eingabemaske zum Zurücksetzen, Ändern oder Einsehen seiner aktuellen Authentifizierungsdaten (zum Beispiel Passwort) angezeigt werden. Vorzugsweise wird der erste Dienst und/oder die besagte Eingabemaske über einen sicheren Datenübertragungskanal KV1 kommuniziert.

Beispielsweise kann zwischen dem Nutzer-Computersystem 112 und dem ersten Computersystem 130 schon im Zuge des ersten, gescheiterten Authentifizierungsversuchs eine Sitzung mit entsprechenden Sitzungsschlüsseln vereinbart werden. An die Sitzung können, zum Beispiel mittels eine "Session-ID", verschiedene Parameter gebunden sein, die vom Nutzer eingegeben und/oder von den Nutzer-Computersystem automatisch ausgelesen werden und die für die Durchführung des ersten Dienstes notwendig oder hilfreich sind. Bei diesen Parametern könnte es sich zum Beispiel um die Rechnung-und Liefer-Adresse eines Bestellformulars, das vom Nutzer schon zumindest teilweise ausgefüllt wurde oder dergleichen handeln. Die Session-ID kann im Zuge der Umschaltungsprozesse ("Redirects") vom ersten KV1 auf den zweiten KV2 Kommunikationskanal, vom zweiten auf den dritten KV3 Kommunikationskanal und vom dritten KV3 auf den ersten KV1 Kommunikationskanal weitergegeben werden und für jeden der Kommunikationskanäle als Session-ID dienen. Das Nutzer-Computersystem kann während all der Umschaltprozesse die Parameterwerte in einem volatilen oder nicht-volatilen Speichermedium in Verknüpfung mit der Session-ID zwischenspeichern um diese Parameterwerte bei der schließlich erfolgten Bereitstellung des ersten Dienstes an den Nutzer 102 zu verwenden. Der Nutzer muss damit diese Werte nicht noch einmal eingeben.

Bei dem in Fig. 1a gezeigten Beispiel findet der Datenaustausch zwischen dem ersten bzw. zweiten Authentifizierungssystem nicht direkt, sondern unter der Vermittlung eines ersten Applikationsprogrammes 178 statt, welches mit einem auf dem Bridge-Computersystem installierten zweiten Applikationsprogramm 180 interoperiert.

**Figur 1b** ist ein Blockdiagramm, dass ein Bridge-Computersystem 118 nach Variante I und seine Komponenten im Detail darstellt.

Das Bridge-Computersystem enthält einen Prozessor 202 und ein computerlesbares Speichermedium 206, zum Beispiel ein elektronisches, magnetisches, optisches, elektromagnetisches oder sonstiges Speichermedium sein. Das Medium kann die Form einer tragbaren Computerdiskette, eine Festplatte, eines EPROM oder Flash-Speichers oder dergleichen sein.

Auf dem Speichermedium ist ein Register 214 gespeichert. Dieses enthält eine Liste von Nutzerkennungen OM einer Vielzahl verschiedener Nutzer. Der Nutzer 102 könnte zum Beispiel die Kennung "alex1976" besitzen. Jedem der Nutzerkennungen sind ein oder mehrere Computersysteme 130,138,170 zugeordnet, deren Authentifizierungssystem als alternatives Authentifizierungssystem dienen kann. Die Zuordnung bedeutet, dass der Nutzer bei den jeweiligen Authentifizierungssystemen der dem Nutzer zugeordneten Computer 130,138,170 bereits registriert ist, also über Authentifizierungsdaten verfügt um sich gegenüber diesen Authentifizierungssystemen zu authentifizieren. Die Authentifizierungsdaten selbst sind jedoch nicht in dem Register oder einem anderen Datencontainer des Bridge-Computersystems gespeichert. Zusätzlich kann das Bridge-Computersystem ein Priorisierungsmodul 203 besitzen, welches einen Einfluss darauf hat, welches alternative Computersystem bzw. Authentifizierungssystem gewählt werden soll, falls dem Nutzer die Adressen mehrerer Computersysteme zugeordnet sind. Die Adressen können zum Beispiel als "Uniform Resource Locators" (URLs) ausgebildet sein und ermöglichen es dem Bridge-Computersystem, die Ausführung des Authentifizierungssystems des zugeordneten Computersystems zu initiieren. Das zweite Applikationsprogramm 180 ist in der Lage, auf das Register und ggf. auch das Priorisierungsmodul zuzugreifen und mit jedem der ersten Applikationsprogramme 178 auf den einzelnen Dienst-Computersystemen 130, 138, 170 zu interoperieren um dadurch den Datenaustausch zwischen Bridge-Computersystem und dem ersten, zweiten und ggf. weiteren Computersystemen zu ermöglichen. Bei dem zweiten Applikationsprogramm 180 kann es sich z.B. um eine Web-Applikation, die von einem Web-Application-Server-Programm bereitgestellt wird, handeln.

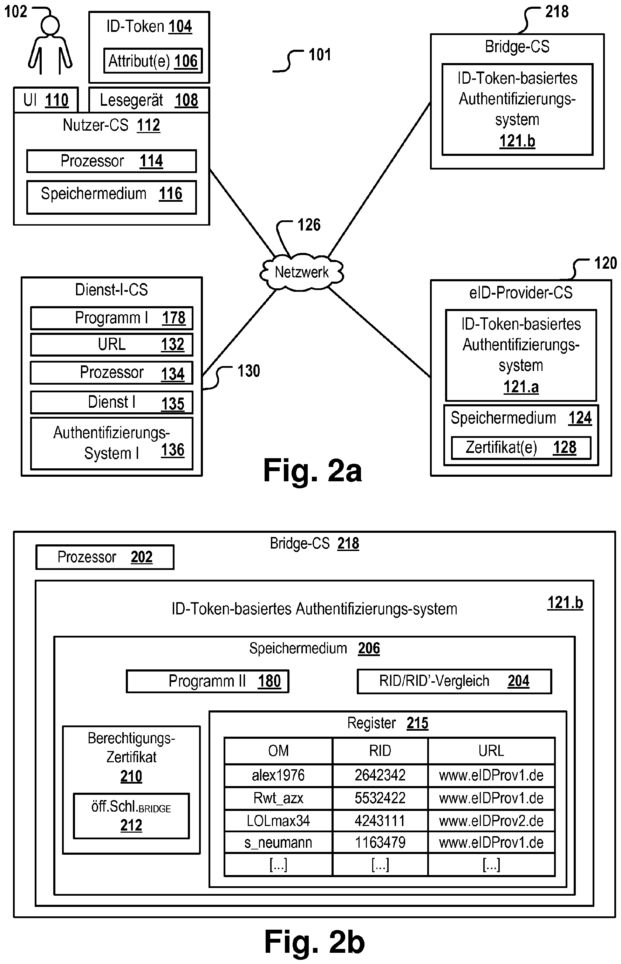

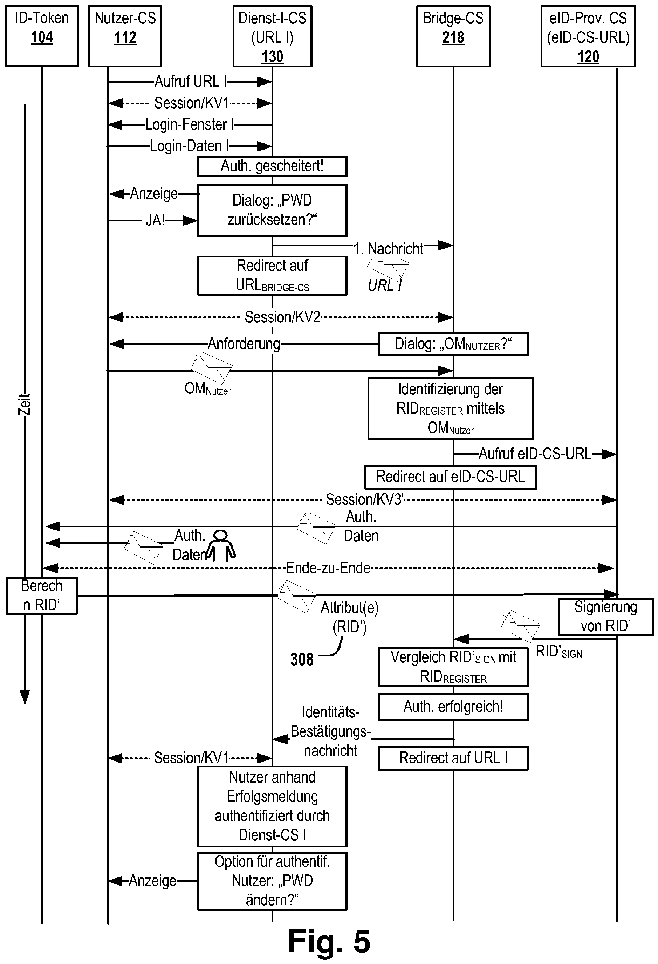

**Die** **Figur 2a** zeigt ein verteiltes Authentifizierungssystem 101 nach Variante II, wobei Variante II nicht Teil der Erfindung ist. Anhand von Fig. 2a wird im Folgenden unter zu Hilfename von **Figur 5** beschrieben, wie der Nutzer 102 sich an einen bestimmten Dienst 135 eines ersten Computersystems 130 authentifizieren kann, obwohl der Nutzer die eigentlich für die Authentifizierung gegenüber dem ersten Authentifizierungssystem 136 erforderlichen Authentifizierungsdaten nicht verfügbar hat.

Um Wiederholungen zu vermeiden, werden im Folgenden vorwiegend diejenigen Aspekte beschrieben, hinsichtlich welcher sich Variante II von Variante I unterscheidet. Komponenten und Computersysteme, auf welche nicht näher eingegangen wird, funktionieren so wie dies bereits vorab für Variante I anhand der Figuren 1a, 1b und 4 beschrieben wurde.

Das verteilte Authentifizierungssystem 101 nach Variante II umfasst zumindest ein Computersystem 130, welches ein Authentifizierungssystem 136 über ein Netzwerk 126 bereitstellt. Außerdem stellt dieses Computersystem einen Dienst 135 über das Netzwerk bereit, allerdings nur an Nutzer, die sich gegenüber dem Authentifizierungssystem 136 erfolgreich authentifiziert haben. Das verteilte Authentifizierungssystem 101 umfasst ferner ein Bridge-Computersystem 218 und ein eID-Provider-Computersystem 120. Das verteilte Authentifizierungssystem 101 kann auch noch eine Vielzahl weiterer Computersysteme 138, 170 wie in Figur 1a dargestellt umfassen, allerdings haben hier diese weiteren Computersysteme nicht die Funktion, ein alternatives Rückfall-Authentifizierungssystem bereitzustellen, sondern stellen lediglich weitere Computersysteme dar, welche alle jeweils das ID-Token-basierte Authentifizierungssystem 121 als alternatives Rückfall-Authentifizierungssystem nutzen. Das ID-Token-basierte Authentifizierungssystem 121 wird durch das Bridge-Computersystem in Zusammenarbeit mit dem eID-Provider-Computersystem bereitgestellt

Das Nutzer-Computersystem 112 umfasst ein Lesegerät 108 oder ist operativ an ein solches Lesegerät gekoppelt. Das Lesegerät ermöglicht den Datenaustausch zwischen dem Nutzer-Computersystem 112 und einem ID-Token 104, auf welchem nutzerbezogene Daten, z.B. ein oder mehrere Attribute 106, sicher gespeichert sind. Das ID-Token 104 ist dem Nutzer 102 persönlich zugeordnet.

Das Bridge-Computersystem 218, dessen Komponenten in Figur 2b im Einzelnen erläutert sind, besitzt ein Speichermedium 106 mit einem Register 215. Es enthält eine Vielzahl von Nutzerkennungen OM, zum Beispiel ,alex1976' oder "s_neumann' wie in Fig. 2b abgebildet. Im Unterschied zu dem Register 214 der Variante I sind diesen Nutzerkennungen jedoch jeweils ein Referenzwert (Figur 2b: Werte in der Spalte "RID") zugeordnet. Es ist möglich, dass das verteilte Authentifizierungssystem 101 mehrere eID-Provider-Computersysteme umfasst und unterschiedlichen Nutzern die Adressen ("www.eIDProv1.de", "www.eIDProv2.de") unterschiedlicher eID-Provider-Computersysteme zugeordnet sind. Typischerweise umfasst das System 101 jedoch nur ein eID-Provider-Computersystem, dessen Adresse in dem Register oder einem anderen Ort des Speichermediums 206 gespeichert ist. Außerdem umfasst das Bridge-Computersystem 218 ein Modul 204 zum Vergleich eines nutzerspezifischen Referenzwerts mit einem von einem ID-Token des Nutzers bereitgestellten Datenwert 308, welches eine Entscheidung darüber trifft, ob angesichts des Vergleichsergebnisses "Datenwert vs. Referenzwert" eine Identität-Bestätigungsnachricht für den Nutzer 102 an das Computersystem 130 gesendet werden soll oder nicht.

Wie für das System nach Variante I bereits beschrieben, versucht der Nutzer 102, eine Bankdienstleistung 135 in Anspruch zu nehmen, scheitert aber bei der Authentifizierung gegenüber dem Authentifizierungssystem 136 des Bank-Dienstanbieters. Das Authentifizierungssystem 136 des Bank-Dienstanbieters sendet eine erste Nachricht (siehe Figur 5) an das Bridge-Computersystem 218. Das Bridge-Computersystem 218 empfängt eine Adresse des Nutzer-Computersystems 112 und sendet eine Anforderung zur Eingabe einer Nutzerkennung an das Nutzer-Computersystem, wie beschrieben. Die Nutzerkennung, die das Bridge-Computersystem zu 118 in Antwort auf diese Anforderung erhält, wird nun genutzt, um anhand des Registers 215 einen dem Nutzer persönlich über dessen Nutzerkennung zugeordneten Referenzwert RID zu identifizieren. Außerdem initiiert das Bridge-Computersystem 218 die Ausführung eines ID-Token-basierten Authentifizierungssystems 121. Das ID-Token-basierten Authentifizierungssystem umfasst zu einem Teil 121.a die Übertragung eines Datenwerts 308 von einem ID-Token an das eID-Computersystem und zu einem weiteren Teil 121.b die Übermittlung dieses Datenwerts an das Bridge-Computersystem und den Vergleich dieses übermittelten Werts mit einem im Register gespeicherten, nutzerspezifischen Referenzwert.
Im Zuge des Authentifizierungsprozesses wird eine Umsetzung (z.B. durch URL Redirect) durchgeführt und ein sicherer Datenübertragungskanal KV3' zwischen dem Nutzer-Computersystem 112 und dem eID-Provider-Computersystem aufgebaut. Im Zuge der Durchführung des ID-Token-basierten Authentifizierungssystems authentifiziert sich sowohl der Nutzer 102, zum Beispiel durch Eingabe einer PIN, als auch das eID-Provider-Computersystem, zum Beispiel mittels eines Zertifikats, gegenüber dem ID-Token 104 des Nutzers 102. Nach erfolgreicher Authentifizierung sowohl des Nutzers als auch des eID-Provider-Computersystems wird ein Ende-zu-Ende-verschlüsselter Kanal zwischen dem ID-Token und dem eID-Provider-Computersystem aufgebaut und über diesen Kanal ein Datenwert 308 von dem ID-Token an das eID-Provider-Computersystem übertragen. Der Datenwert wird von dem eID-Provider-Computersystem 120 an das Bridge-Computersystem 218 übertragen und dort von dem Vergleichsmodul 204 mit einem Referenzwert, der dem Nutzer 102 zugeordnet und in dem Register 215 gespeichert ist, verglichen. Zur Erhöhung der Sicherheit kann der Datenwert auch von dem eID-Provider-Computersystem vor der Übertragung signiert werden. Stellt das Vergleichsmodul 204 fest, dass der empfangene Datenwert 308 mit dem gespeicherten Referenzwert übereinstimmt, gilt der Nutzer 102 als vertrauenswürdig und es wird eine Identitäts-Bestätigungsnachricht von dem Bridge-Computersystem 218 an das Computersystem 130, das den Bankdienst bereitstellt, gesendet. Die übrigen Schritte erfolgen wie zuvor schon für die Variante I beschrieben.

**Figur 2b** ist ein Blockdiagramm, das ein Bridge-Computersystem 218 nach Variante II und seine Komponenten im Detail darstellt, wobei Variante II nicht Teil der Erfindung ist.

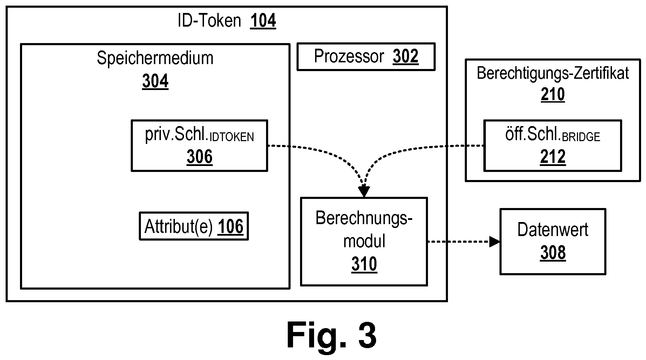

Auf dem Speichermedium 206 ist ein Register 215 gespeichert. Dieses enthält eine Liste von Nutzerkennungen OM einer Vielzahl verschiedener Nutzer. Der Nutzer 102 könnte zum Beispiel die Kennung "alex1976" besitzen. Jeder der Nutzerkennungen ist ein Referenzwert zugeordnet, der Nutzerkennung 'alex1976' also zum Beispiel ein Wert ,2642342'. Ein Vergleichsmodul 204 ist in der Lage, einen Datenwert 308, der im Zuge der Durchführung des ID-Token-basierten Authentifizierungssystems 121 von dem Bridge-Computersystem 218 empfangen wird, mit dem für den Nutzer in dem Register gespeicherten Referenzwert zu vergleichen. Bei Identität sendet das Bridge-Computersystem 218 eine Identität-Bestätigungsnachricht an das dienstanbietende Computersystem 130. Nach manchen Implementierungsvarianten kann das Bridge-Computersystem ferner ein Berechtigungszertifikat 210 mit einem öffentlichen Schlüssel 212 aufweisen, dessen Funktion im Folgenden anhand Figur 3 näher erläutert wird.

**Figur 3** ist ein Blockdiagramm eines ID-Tokens 104, das dem Nutzer 102 zugeordnet ist. Es umfasst einen Prozessor 302, ein Speichermedium 304 und ein Berechnungsmodul 310 zur Berechnung eines Datenwertes 308, welcher den Nutzer im Zuge der Ausführung des ID-Token-Token-basierten Authentifizierungssystems als berechtigt ausweisen soll. In dem Speicher sind ein oder mehrere nutzerspezifische Attribute 106 gespeichert. Die Attribute können zum Beispiel personenbezogene Daten wie etwa Name, Alter, Anschrift oder ähnliches betreffen. Außerdem ist auf dem Speichermedium ein privater Schlüssel 306 des ID-Tokens gespeichert. Bei dem ID-Token kann es sich zum Beispiel um eine Chipkarte handeln. Insbesondere kann es sich bei dem ID-Token um einen elektronischen Personalausweis handeln.

Im Zuge der ID-Token-basierten Authentifizierung wird ein dem Bridge-Computersystem zugeordnetes Berechtigungszertifikat 210 mit einem für das Bridge-Computersystem ausgestellten öffentlichen Schlüssel 212 von dem eID-Provider-Computersystem an das ID-Token 104 übertragen. Der Prozessor 302 des ID-Tokens 104 führt entsprechend den Instruktionen des Berechnungsmoduls 310 eine Ableitungsfunktion durch, welche mithilfe des privaten Schlüssels 306 ("priv.Schl._{IDTOKEN}") des ID-Tokens aus dem öffentlichen Schlüssel 212 einen Datenwert 308 ableitet. Der abgeleitete Datenwert 308, in welchen der öffentliche Schlüssel 212 ("öff.Schl._{BRIDGE}") des Bridge-Computersystems eingeht, ist vorzugsweise spezifisch für das Bridge-Computersystem 218 und den Nutzer bzw. dessen ID-Token. Die Ableitungsfunktion kann zum Beispiel aus einer Multiplikationsfunktion bestehen und der abgeleitete Datenwert 308 ist das Produkt aus dem öffentlichen Schlüssel 212 und dem privaten Schlüssel 306. Alternativ können aber auch komplexere Ableitungsfunktionen verwendet werden.

Der abgeleitete Datenwert 308 kann beispielsweise durch das ,Restricted Identification' (RI) Protokoll, das in der technischen Richtlinie TR-03110 des Bundesministerium für Sicherheit in der Informationstechnik (BSI) spezifiziert ist, aus dem öffentlichen Schlüssel 212 und dem privaten Schlüssel 306 abgeleitet werden. Der abgeleitete Datenwert stellt also ein Pseudonym dar, was vorteilhaft ist, da es eine Authentifizierung des ID-Tokens gegenüber dem Bridge-Computersystem ermöglicht, ohne dass der Realname des Nutzers beim Authentifizierungsprozess mittels dieses Datenwerts 308 preisgegeben wird, was dem Datenschutz dient. Die Restricted Identification 308 kann mittels einer Schlüssel-Vereinbarungsfunktion KA, z.B. einem Diffie-Hellman Schlüsselaustausch und einem Hashalgorithmus H berechnet werden, z.B. nach der Formel:
RI_{BRIDGE-IDTOKEN} = H(KA(priv.Schl._{IDTOKEN}, öff.Schl._{BRIDGE}, Domänenparameter)); Unter Vernachlässigung des (sehr unwahrscheinlichen) Falls von Hash-Kollisionen ist der generierte Datenwert 308 (RI_{BRIDGE-IDTOKEN}) einzigartig für diese Kombination aus Bridge-Computersystem und ID-Token.

Falls ein ID-Token nach Variante I zur Authentifizierung gegenüber einem der ersten Computersysteme, die jeweils einen Dienst bereitstellen, verwendet wird, kann der Datenwert 308 in völlig analoger Weise berechnet werden: Ein Berechtigungszertifikat, das dem ersten Computersystem bzw. dessen Dienst spezifisch zugeordnet ist, wurde im Zuge der Registrierung des Nutzers bei diesem Dienst auf dem ID-Token des Nutzers sicher gespeichert. Der Prozessor 302 des ID-Tokens 104 führt entsprechend den Instruktionen des Berechnungsmoduls 310 eine Ableitungsfunktion durch, welche mithilfe des privaten Schlüssels 306 ("priv.Schl._{IDTOKEN}") des ID-Tokens aus dem öffentlichen Schlüssel des ersten Computersystems einen Datenwert 308 ableitet. Der abgeleitete Datenwert 308, in welchen der öffentliche Schlüssel 212 ("öff.Schl._{DIENST}") des ersten Computersystems 130 eingeht, ist vorzugsweise spezifisch für dieses erste Computersystem 130 bzw. dessen Dienst und den Nutzer bzw. dessen ID-Token. Die Ableitungsfunktion kann aus einer Multiplikationsfunktion bestehen oder aus einer komplexen Ableitungsfunktion, z.B. dem RI Protokoll. Die analoge Formel der Ableitungsfunktion würde hier lauten:
RI_{DIENST-IDTOKEN} = H(KA(priv.Schl._{IDTOKEN}, öff.Schl._{DIENST}, Domänenparameter));

Der Datenwert 308 wird nun mithilfe des privaten Schlüssels 306 des ID-Tokens signiert und an das eID-Provider-Computersystem 120 in signierter Form übertragen. Die Übertragung des Datenwerts erfolgt vorzugsweise über eine Ende-zu Ende verschlüsselte Verbindung zwischen ID-Token und eID-Provider-Computersystem. Das eID-Provider-Computersystem leitet den Datenwert 308 an das Bridge-Computersystem 118 weiter um einen Vergleich des Datenwerts mit einem Referenzwert und ggf. auch eine Prüfung der Signatur des Datenwerts zu ermöglichen.

### Bezugszeichenliste

- 100: verteiltes Authentifizierungssystem nach Variante I
- 101: verteiltes Authentifizierungssystem nach Variante II, wobei Variante II nicht Teil der Erfindung ist
- 102: Nutzer
- 104: ID-Token
- 106: Attribut (e)
- 108: Lesegerät
- 110: Nutzer-Schnittstelle
- 112: Nutzer-Computersystem
- 114: Prozessor
- 116: Speichermedium
- 118: Bridge-Computersystem nach Variante I
- 120: eID-Provider-Computersystem
- 121: ID-Token-basiertes Authentifizierungssystem
- 124: Speichermedium
- 126: Netzwerk
- 128: Zertifikat (e)
- 130: erstes Computersystem
- 132: Adresse erstes Computersystem
- 134: Prozessor
- 135: erster Dienst
- 136: erstes Authentifizierungssystem
- 138: zweites Computersystem
- 140: Adresse zweites Computersystem
- 142: Prozessor
- 143: zweiter Dienst
- 144: zweites Authentifizierungssystem
- 170: drittes Computersystem
- 172: drittes Authentifizierungssystem
- 174: Speichermedium
- 176: dritter Dienst
- 178: erstes Applikationsprogramm
- 180: zweites Applikationsprogramm
- 202: Prozessor
- 203: Priorisierungsmodul
- 204: Modul zum Datenwertvergleich
- 206: Speichermedium
- 210: Berechtigungs-Zertifikat
- 212: Öffentliche Schlüssel_{Bridge-Computersystem}
- 214: Register nach Variante I
- 215: Register nach Variante II, wobei Variante II nicht Teil der Erfindung ist
- 218: Bridge-Computersystem nach Variante II, wobei Variante II nicht Teil der Erfindung ist
- 302: Prozessor
- 304: Speichermedium
- 306: privater Schlüssel_{ID-Token}
- 308: berechneter Datenwert
- 310: Berechnungsmodul

## Patentansprüche

1. Verteiltes Authentifizierungssystem (100) umfassend:
- ein erstes Computersystem (130), wobei das erste Computersystem ein erstes Authentifizierungssystem (136) bereitstellt, wobei das erste Computersystem einen ersten Dienst über ein Netzwerk (126) an einen oder mehrere erfolgreich über das erste Authentifizierungssystem authentifizierte Nutzer (102) bereitstellt;
- ein zweites Computersystem (138), wobei das zweite Computersystem ein zweites Authentifizierungssystem (144) bereitstellt, wobei das zweite Computersystem einen zweiten Dienst (143) über das Netzwerk an ein oder mehrere erfolgreich über das zweite Authentifizierungssystem authentifizierte Nutzer (102) bereitstellt;
- ein Bridge-Computersystem (118), welches mit dem ersten und zweiten Computersystem über das Netzwerk verbunden ist;
• wobei das erste Authentifizierungssystem dazu ausgebildet ist, eine Authentifizierungsanfrage eines Nutzers (102) gegenüber dem ersten Authentifizierungssystem zu empfangen, wobei das erste Authentifizierungssystem eine Schnittstelle zum Empfang der Authentifizierungsanfrage von einem dem Nutzer (102) zugeordneten Nutzer-Computersystem (112) umfasst;
• wobei das erste Authentifizierungssystem dazu ausgebildet ist, im Falle eines erfolglosen Authentifizierungsversuchs des Nutzers gegenüber dem ersten Authentifizierungssystem diesen erfolglosen Authentifizierungsversuch an das Bridge-Computersystem mittels einer ersten Nachricht zu kommunizieren;
• wobei das Bridge-Computersystem dazu ausgebildet ist, im Falle des Erhalts der ersten Nachricht eine Aufforderung zur Eingabe zumindest einer Nutzerkennung (OM) an das Nutzer-Computersystem zu senden und dazu ausgebildet ist, zumindest die Nutzerkennung (OM) vom Nutzer-Computersystem zu empfangen;
• wobei das Bridge-Computersystem ein Register (214) enthält, welches dem Nutzer mehrere Computersysteme (130, 138, 170), welche dem Nutzer nach jeweils erfolgreicher Authentifizierung einen Dienst bereitstellen, zuweist, wobei die mehreren zugewiesenen Computersysteme zumindest das erste und zweite Computersystem umfassen;
• wobei das Bridge-Computersystem dazu ausgebildet ist, eine in dem Register gespeicherte Adresse des zweiten Computersystems anhand der empfangenen Nutzerkennung zu identifizieren und die Ausführung des zweiten Authentifizierungssystems zur Authentifizierung des Nutzers unter Verwendung der identifizierten Adresse zu initiieren;
• wobei das zweite Authentifizierungssystem dazu ausgebildet ist, im Falle einer erfolgreichen Authentifizierung des Nutzers (102) gegenüber dem zweiten Authentifizierungssystem diese erfolgreiche Authentifizierung an das Bridge-Computersystem mittels einer zweiten Nachricht zu kommunizieren;
• wobei das Bridge-Computersystem dazu ausgebildet ist, im Falle des Empfangs der zweiten Nachricht eine Identitäts-Bestätigungsnachricht bezüglich des Nutzers (102) an das erste Authentifizierungssystem zu kommunizieren;
• wobei das erste Authentifizierungssystem dazu ausgebildet ist, im Falle eines Erhalts der Identitäts-Bestätigungsnachricht den Nutzer als erfolgreich authentifiziert zu behandeln und diesem den ersten Dienst bereitzustellen.

2. Computerimplementiertes Verfahren zur Authentifizierung eines Nutzers (102) umfassend:
- Senden einer Authentifizierungsanfrage des Nutzers (102) von einem dem Nutzer zugeordneten Nutzer-Computersystem (112) an ein erstes Authentifizierungssystem (136) eines ersten Computersystems (130), wobei das erste Computersystem einen ersten Dienst über ein Netzwerk (126) an einen oder mehrere erfolgreich über das erste Authentifizierungssystem authentifizierte Nutzer (102) bereitstellt;
- Empfang der Authentifizierungsanfrage durch das erste Computersystem;
- im Falle eines erfolglosen Authentifizierungsversuchs des Nutzers gegenüber dem ersten Authentifizierungssystem mittels der Authentifizierungsanfrage, Senden einer ersten Nachricht von dem ersten Computersystem an ein Bridge-Computersystem (118);
- Empfang der ersten Nachricht durch das Bridge-Computersystem, wobei das Bridge-Computersystem ein Register (214) enthält, welches dem Nutzer mehrere Computersysteme, welche dem Nutzer nach jeweils erfolgreicher Authentifizierung einen Dienst bereitstellen, zuweist, wobei die mehreren zugewiesenen Computersysteme zumindest das erste und ein zweites Computersystem (138) umfassen, wobei das zweite Computersystem ein zweites Authentifizierungssystem (144) bereitstellt, wobei das zweite Computersystem einen zweiten Dienst über das Netzwerk an ein oder mehrere erfolgreich über das zweite Authentifizierungssystem authentifizierte Nutzer bereitstellt;
- in Antwort auf den Erhalt der ersten Nachricht, Senden einer Aufforderung zur Eingabe einer dem Nutzer zugeordneten Nutzerkennung (OM) vom Bridge-Computersystem an das Nutzer-Computersystem um zumindest die Nutzerkennung (OM) vom Nutzer-Computersystem zu empfangen;
- Identifikation einer in dem Register gespeicherten Adresse des zweiten Computersystems anhand der empfangenen Nutzerkennung durch das Bridge-Computersystem;
- Initiierung der Ausführung des zweiten Authentifizierungssystems unter Verwendung der identifizierten Adresse zur Authentifizierung des Nutzers;
- Senden einer zweiten Nachricht vom zweiten Computersystem an das Bridge-Computersystem, falls der Nutzer (102) sich im Zuge der Ausführung des zweiten Authentifizierungssystems sich erfolgreich gegenüber dem zweiten Authentifizierungssystem authentifiziert hat;
- in Antwort auf den Erhalt der zweiten Nachricht, Senden einer Identitäts-Bestätigungsnachricht bezüglich des Nutzers (102) vom Bridge-Computersystem an das erste Authentifizierungssystem;
- in Antwort auf den Erhalt der Identitäts-Bestätigungsnachricht, Behandlung des Nutzers als erfolgreich authentifiziert und Bereitstellung des ersten Dienstes an den authentifizierten Nutzer (102) durch das erste Computersystem.

3. Computerimplementiertes Verfahren nach Anspruch 2, wobei das Bridge-Computersystem über ein Priorisierungsmodul (203) verfügt, wobei das Priorisierungsmodul aus den mehreren Computersystemen, die dem Nutzer (102) über dessen Nutzerkennung (OM) im Register (214) zugewiesen sind, dasjenige Computersystem auswählt und als das zweite Computersystem verwendet, welches eine Bedingung erfüllt, wobei die Bedingung darin besteht, dass:
- das auszuwählende Computersystem die geringste Prozessorauslastung unter den mehreren Computersystemen hat; oder
- die Prozessorauslastung des auszuwählenden Computersystem unterhalb eines Schwellenwertes liegt; oder
- jedem der mehreren im Register gespeicherten Computersysteme eine Sicherheitsstufe zugewiesen ist, wobei die Sicherheitsstufe die Höhe der Anforderungen an einen Nutzer zur Authentifizierung gegenüber dem Authentifizierungssystems des jeweiligen Computersystems angibt, wobei das auszuwählende Computersystem die höchste Sicherheitsstufe aufweist oder eine Sicherheitsstufe oberhalb eines Grenzwerts aufweist; oder
- eine durch den Nutzer editierbare Konfigurationsdatei das auszuwählende Computersystem als priorisiert ausweist.

4. Das Computerimplementierte Verfahren nach einem der Ansprüche 2-3:
- wobei das erste Computersystem (130) und das Bridge-Computersystem von unterschiedlichen Personen oder Organisationen betrieben werden, wobei die Implementierung des ersten Authentifizierungssystems (136) ausschließlich den Verfügungen des Betreibers des ersten Computersystems unterworfen ist.

## Claims

1. A distributed authentication system (100) comprising:
- a first computer system (130), wherein the first computer system provides a first authentication system (136), and wherein the first computer system provides, via a network (126), a first service to one or more users (102) that have been successfully authenticated via the first authentication system;
- a second computer system (138), wherein the second computer system provides a second authentication system (144), and wherein the second computer system provides, via the network, a second service (143) to one or more users (102) that have been successfully authenticated via the second authentication system;
- a bridge computer system (118) that is connected, via the network, to the first and second computer systems;
• the first authentication system being designed to receive a request for authentication of a user (102) to the first authentication system, the first authentication system comprising an interface to receive the authentication request from a user computer system (112) that is associated with the user (102);
• the first authentication system being designed, if the user's authentication attempt with respect to the first authentication system is unsuccessful, to communicate this unsuccessful authentication attempt to the bridge computer system by means of a first message;
• the bridge computer system being designed, if it receives the first message, to send to the user computer system a request to input at least a user ID (OM), and being designed to receive at least the user ID (OM) from the user computer system;
• the bridge computer system containing a register (214) which assigns, to the user, multiple computer systems (130, 138, 170) that provide a service to the user after each successful authentication, the multiple assigned computer systems comprising at least the first and second computer system;
• the bridge computer system being designed to identify an address of the second computer system stored in the register on the basis of the received user ID and to initiate execution of the second authentication system to authenticate the user using the identified address;
• the second authentication system being designed, if the user (102) has been successfully authenticated with respect to the second authentication system, to communicate this successful authentication to the bridge computer system by means of a second message;
• the bridge computer system being designed, if the second message is received, to communicate an identity confirmation message regarding the user (102) to the first authentication system;
• the first authentication system being designed, if it receives the identity confirmation message, to treat the user as successfully authenticated, and to provide the first service to the user.

2. A computer-implemented method for authenticating a user (102) comprising the steps of:
- sending a request for authentication of the user (102) from a user computer system (112) associated with the user to a first authentication system (136) of a first computer system (130), the first computer system providing, via a network (126), a first service to one or more users (102) that have been successfully authenticated via the first authentication system;
- receiving, by the first computer system, the authentication request;
- if the user authentication attempt with respect to the first authentication system by means of the authentication request is unsuccessful, sending a first message from the first computer system to a bridge computer system (118);
- receiving the first message by the bridge computer system, the bridge computer system containing a register (214) that assigns, to the user, multiple computer systems that provide a service to the user after each successful authentication, the multiple assigned computer systems comprising at least the first and a second computer system (138), the second computer system providing a second authentication system (144), and the second computer system providing, via the network, a second service to one or more users that have been successfully authenticated via the second authentication system;
- in response to receiving the first message, sending a request, from the bridge computer system to the user computer system, to input a user ID (OM) associated with the user, in order to receive from the user computer system at least the user ID (OM);
- identifying an address of the second computer system stored in the register, on the basis of the user ID received by the bridge computer system;
- initiating execution of the second authentication system using the identified address for authentication of the user;
- sending a second message from the second computer system to the bridge computer system if the user (102) has, during execution of the second authentication system, successfully authenticated himself with respect to the second authentication system;
- in response to receiving the second message, sending, from the bridge computer system to the first authentication system, an identity confirmation message regarding the user (102);
- in response to receiving the identity confirmation message, treating, by the first computer system, the user as successfully authenticated and providing the first service to the authenticated user (102).

3. The computer-implemented method according to claim 2, wherein the bridge computer system has a prioritisation module (203), the prioritisation module selecting, from the multiple computer systems that are assigned to the user (102) in the register (214) via his user ID (OM), the computer system that meets a condition and uses this computer system as the second computer system, the condition being that:
- the computer system to be selected is the one among the multiple computer systems that has the lowest processor utilisation; or
- the processor utilisation of the computer system to be selected lies below a threshold value; or
- each of the multiple computer systems stored in the register is assigned a security level, the security level indicating the level of the requirements on a user for authentication with respect to the authentication system of the computer system in question, the computer system to be selected being the one that has the highest security level or that has a security level above a limit value; or
- a user-editable configuration file has prioritised the computer system to be selected.

4. The computer-implemented method according to one of claims 2-3:
- wherein the computer system (130) and the bridge computer system are operated by different persons or organisations, the implementation of the first authentication system (136) being exclusively subject to the decisions of the operator of the first computer system.

## Revendications

1. Système d'authentification partagé (100) comprenant :
- un premier système informatique (130), le premier système informatique fournissant un premier système d'authentification (136), le premier système informatique fournissant un premier service par le biais d'un réseau (126) à un ou plusieurs utilisateurs (102) authentifiés avec succès par le biais du premier système d'authentification ;
- un deuxième système informatique (138), le deuxième système informatique fournissant un deuxième système d'authentification (144), le deuxième système informatique fournissant un deuxième service (143) par le biais du réseau à un ou plusieurs utilisateurs (102) authentifiés avec succès par le biais du deuxième système d'authentification ;
- un système informatique en pont (118) lequel est relié avec le premier et le deuxième système informatique par le biais du réseau ;
• où le premier système d'authentification est conçu pour recevoir une demande d'authentification d'un utilisateur (102) vis-à-vis du premier système d'authentification, où le premier système d'authentification comprend une interface pour la réception de la demande d'authentification d'un système informatique d'utilisateur (112) associé à l'utilisateur (102) ;
• où le premier système d'authentification est conçu, dans le cas d'un essai d'authentification non couronné de succès de l'utilisateur vis-à-vis du premier système d'authentification, pour communiquer cet essai d'authentification non couronné de succès au système informatique en pont au moyen d'un premier message ;
• où le système informatique en pont est conçu, dans le cas de la réception du premier message, pour envoyer une demande pour l'entrée d'au moins un identifiant d'utilisateur (OM) au système informatique d'utilisateur et est conçu pour recevoir au moins l'identifiant d'utilisateur (OM) du système informatique d'utilisateur ;
• où le système informatique en pont contient un registre (214), lequel associe à l'utilisateur plusieurs systèmes informatiques (130, 138, 170) lesquels fournissent à l'utilisateur un service après respectivement une authentification réussie, où les multiples systèmes informatiques associés comprennent au moins le premier et le deuxième système informatique ;
• ou le système informatique en pont est conçu pour identifier une adresse du deuxième système informatique stockée dans le registre à l'aide de l'identifiant d'utilisateur reçu et pour initier l'exécution du deuxième système d'authentification pour l'authentification de l'utilisateur moyennant l'emploi de l'adresse identifiée ;
• où le deuxième système d'authentification est conçu pour communiquer cette authentification réussie, dans le cas d'une authentification réussie de l'utilisateur (102) vis-à-vis du deuxième système d'authentification, au système informatique en pont au moyen d'un deuxième message ;
• où le système informatique en pont est conçu pour, dans le cas de la réception du deuxième message, communiquer un message de confirmation d'identité concernant l'utilisateur (102) au premier système d'authentification ;
• où le premier système d'authentification est conçu pour, dans le cas d'une réception du message de confirmation d'identité, traiter l'utilisateur comme étant authentifié avec succès et fournir à celui-ci le premier service.

2. Procédé mis en œuvre par ordinateur pour l'authentification d'un utilisateur (102) comprenant :
- l'envoi d'une demande d'authentification de l'utilisateur (102) par un système informatique d'utilisateur (112) associé à l'utilisateur à un premier système d'authentification (136) d'un premier système informatique (130), le premier système informatique fournissant un premier service par le biais d'un réseau (126) à un ou plusieurs utilisateurs (102) authentifiés avec succès par le biais du premier système d'authentification ;
- la réception de la demande d'authentification par le premier système informatique ;
- dans le cas d'un essai d'authentification non couronné de succès de l'utilisateur vis-à-vis du premier système d'authentification au moyen de la demande d'authentification, l'envoi d'un premier message du premier système informatique au système informatique en pont (118) ;
- la réception du premier message par le système informatique en pont, où le système informatique en pont contient un registre (214), lequel associe à l'utilisateur plusieurs systèmes informatiques, lesquels fournissent à l'utilisateur un service après respectivement une authentification réussie, où les multiples systèmes informatiques associés comprennent au moins le premier et un deuxième système informatique (138), où le deuxième système informatique fournit un deuxième système d'authentification (144), le deuxième système informatique fournissant un deuxième service par le biais du réseau à un ou plusieurs utilisateurs authentifiés avec succès par le biais du deuxième système d'authentification ;
- en réponse à la réception du premier message, l'envoi d'une demande pour l'entrée d'au moins un identifiant d'utilisateur (OM) associé à l'utilisateur du système informatique en pont au système informatique d'utilisateur pour recevoir au moins l'identifiant d'utilisateur (OM) du système informatique d'utilisateur ;
- l'identification d'une adresse du deuxième système informatique stockée dans le registre à l'aide de l'identifiant d'utilisateur reçu par le système informatique en pont ;
- l'initiation de l'exécution du deuxième système d'authentification pour l'authentification de l'utilisateur moyennant l'emploi de l'adresse identifiée ;
- l'envoi d'un deuxième message du deuxième système informatique au système informatique en pont, dans le cas où l'utilisateur (102) s'est authentifié avec succès vis-à-vis du deuxième système d'authentification dans le cadre de l'exécution du deuxième système d'authentification ;
- en réponse à la réception du deuxième message, l'envoi d'un message de confirmation d'identité concernant l'utilisateur (102) par le système informatique en pont au premier système d'authentification ;
- en réponse à la réception du message de confirmation d'identité, le traitement de l'utilisateur comme étant authentifié avec succès et la fourniture du premier service à l'utilisateur (102) authentifié par le premier système informatique.

3. Procédé mis en œuvre par ordinateur selon la revendication 2, dans lequel le système informatique en pont dispose d'un module de priorisation (203), le module de priorisation choisit, parmi les multiples systèmes informatiques qui sont associés à l'utilisateur (102), par le biais de son identifiant d'utilisateur (OM) dans le registre (214), le système informatique en question et l'emploie en tant que deuxième système informatique, lequel remplit une condition, la condition consistant à ce que :
- le système informatique à choisir a le taux d'utilisation de processeur le plus faible parmi les multiples systèmes informatiques ; ou
- le taux d'utilisation de processeur du système informatique à choisir se situe en-dessous d'une valeur de seuil ; ou
- un niveau de sécurité est associé à chacun des multiples systèmes informatiques stockés dans le registre, où le niveau de sécurité indique l'importance des exigences à un utilisateur pour l'authentification vis-à-vis du système d'authentification du système informatique respectif, où le système informatique à choisir présente le niveau de sécurité le plus élevé ou présente un niveau de sécurité au-dessus d'une valeur limite ; ou
- une donnée de configuration pouvant être éditée par l'utilisateur présente le système informatique à choisir comme priorisé.

4. Procédé mis en œuvre par ordinateur selon l'une des revendications 2 ou 3 :
- dans lequel le premier système informatique (130) et le système informatique en pont sont mis en fonction par diverses personnes ou organisations, la mise en œuvre par ordinateur du premier système d'authentification (136) étant exclusivement soumise aux disponibilités de l'opérateur du premier système informatique.
